(19) Europäisches Patentamt / European Patent Office / Office européen des brevets

(11) **EP 4 485 376 A1**

(12) **EUROPEAN PATENT APPLICATION**

(43) Date of publication:
**01.01.2025 Bulletin 2025/01**

(21) Application number: **23306101.9**

(22) Date of filing: **30.06.2023**

(51) International Patent Classification (IPC):
**G06V 10/774** (2022.01)  **G06V 10/82** (2022.01)
**G06V 40/10** (2022.01)

(52) Cooperative Patent Classification (CPC):
**G06V 40/15; G06V 10/774; G06V 10/82**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **DOTSIFY SAS**
**75020 Paris (FR)**

(72) Inventors:
• **SEMAH, Thomas**
**75020 Paris (FR)**
• **NAVARRO SUNE, Xavier**
**75020 Paris (FR)**

(74) Representative: **Icosa**
**83 avenue Denfert-Rochereau**
**75014 Paris (FR)**

(54) **NEURAL BIOMETRIC AUTHENTICATION SYSTEM AND METHOD**

(57) The present invention relates to a neural biometric authentication system (1000) and a computer-implemented method for securely authenticating a user (10). The system (1000) and method are based on the generation of at least one individual biometric identifier - IBI - from at least user representative synthetic data {N$_s$} (S70), said user representative synthetic data being generated from neural data {N} of said user (10) received by a pre-trained generative model. Said at least one IBI enables to authenticate said user (10) when compared to at least one user's signature stored in a memory (40). Said at least one IBI can replace both identifier and password to authenticate and login said user (10) without containing any personal biometric data, guaranteeing the anonymity of the login data that can be exchanged remotely.

FIG. 1

EP 4 485 376 A1

**Description**

**FIELD OF INVENTION**

The present invention relates to the general field of biometric identification, particularly to a neural biometric authentication system and method for providing a secure, user-specific multimedia experience using individual neural signatures.

**BACKGROUND OF INVENTION**

In today's digital era, online platforms and services have become an inseparable part of our everyday life. Users engage with a myriad of websites, applications, and services that necessitate authentication and access control. As it stands, the most prevalent method of user authentication is based on the creation and management of multiple accounts across diverse platforms, each with its unique login credentials (for example, usernames and passwords). This fragmented approach leads to several challenges and inconveniences for both users and service providers.

Existing Limitations and Challenges:

User Burden: Users face the challenge of remembering multiple usernames and passwords for different services, leading to password fatigue, increased security risks, and a higher likelihood of forgotten credentials. This burden discourages users from engaging with new platforms and can result in a poor user experience.

Security Risks: Many users resort to using weak passwords or reusing passwords across multiple services due to the difficulty of managing multiple credentials. This practice poses significant security risks, as a data breach on one platform can expose user accounts on other services.

Inefficiency for Service Providers: Managing user accounts, authentication systems, and password-related support requests can be resource-intensive for service providers. Additionally, they may face challenges in ensuring consistent security practices across their user base.

Thus, there is a clear need for a universal login system that addresses the limitations and challenges mentioned above.

Current methods of user recognition, such as facial recognition and voice recognition, often require the use of external devices, such as cameras or microphones. Palm print requires palmprint scanner or palmprint reader. Fingerprint requires fingerprint sensors. Retinal scanning requires a retinal scanner. Iris recognition requires an iris scanner, typically an electronic device equipped with a specialized camera and subtle infrared light. These methods can also be vulnerable to spoofing and other security threats.

Thus, there is also a need for a universal login system that uses physiological data measured directly from the users to recognize them and grant access to their digital space.

**SUMMARY**

This present disclosure relates to a neural biometric authentication system for securely authenticate a user, the system comprising:

- a receiving module configured to receive biometric data of said user, said biometric data comprising at least neural data {N} of said user, said neural data {N} comprising at least one neural signal $S_N$ function of time and of at least one channel, said at least one channel covering a specific area of said user's head;
- an encoding module comprising:

  o an augmentation module configured to generate user representative synthetic data {$N_s$} by using at least one generative model configured to receive as input said received neural data {$N_r$}, wherein said at least one generative model has been previously pre-trained on neural data obtained from a plurality of subjects at different mental states, from different recording devices, and acquired by at least two channels;
  o an identity - ID - generating module configured to generate at least one individual biometric identifier - IBI - from at least said generated user representative synthetic data {$N_s$} using a biometric identity - ID - model, said biometric ID model being a Transformer-based model;

- a recognition module comprising an identity - ID - management module configured to, depending on a predetermined condition:

o compare said at least one IBI to at least one user's signature stored in a memory and output an authentication result; or

o save said at least one IBI as at least one user's signature in said memory.

According to other advantageous aspects of the disclosure, the system comprises one or more of the features described in the following embodiments, taken alone or in any possible combination:

said at least one generative model is configured for generating said user representative synthetic data $\{N_s\}$ comprising synthetic neural signals function of time and of at least one synthetic channel, said at least one synthetic channel covering an area of said user's head different from said specific area covered by said at least one channel of said received neural data $\{N_r\}$;

said at least one generative model is a Generative Adversarial Network - GAN - based model using a convolutional neural network architecture, said at least one generative model being fine-tuned with an enrollment dataset, and wherein said enrollment dataset comprises recording neural data of said user at various mental states and/or at various times of a day;

when the biometric data (20) received comprises more modalities in addition to neural data $\{N\}$, such as physiological data $\{P\}$ and/or anatomical data $\{A\}$, and depending on a first configuration parameter, said at least one individual biometric identifier - IBI - generated by the identifier ID generating module (250) comprises:

- a first IBI obtained from at least said user representative synthetic data $\{N_s\}$ and, at least a second IBI obtained from said physiological data $\{P\}$ and/or said anatomical data $\{A\}$; and/or
- a first mixed IBI obtained from a combination of at least said user representative synthetic data $\{N_s\}$ and, said physiological data $\{P\}$ and/or said anatomical data $\{A\}$;

the system further comprises a pre-processing module configured to: pre-process said received biometric data by applying at least one of: a bandpass filter, an alignment, an artifact removal, and/or a standardization; analyze said received biometric data, respectively said pre-processed biometric data when available, and compute a quality parameter; and/or wherein the augmentation module is configured to receive said pre-processed and/or analyzed neural data $\{N_{p/a}\}$ and, to generate said user representative synthetic data $\{N_s\}$ by using said pre-processed and/or analyzed neural data $\{N_{p/a}\}$ instead of the received neural data $\{N_r\}$;

the system further comprises:

- a transmission module configured to encrypt said at least one individual biometric identifier - IBI - and transmit the at least one encrypted IBI through a communication network;
- a decrypting module configured to receive and decrypt said at least one encrypted IBI;

wherein, depending on said predetermined condition, said ID management module is configured to:

o compare said at least one decrypted IBI to at least one user's signature stored in said memory and output the authentication result; or

o save said at least one decrypted IBI as at least one user's signature in said memory;

the system further comprises a conversion module which, when the biometric data received comprises more modalities in addition to neural data $\{N\}$, such as physiological data $\{P\}$ and/or anatomical data $\{A\}$, converts, for at least one modality, the corresponding data received into at least one 1D or 2D data slice $\{I_N, I_P$ and/or $I_A\}$; and wherein, depending on a second configuration parameter:

- said least one generative model is configured to receive as input the at least 1D or 2D neural data slice $\{I_N\}$, instead of said received neural data $\{N_r\}$; and/or
- said at least one individual biometric identifier - IBI - generated by the identifier ID generating module comprises:

o a first IBI obtained from at least said synthetic data and, at least a third IBI obtained from said at least one 1D or 2D data slice $\{I_N, I_P$ and/or $I_A\}$;
and/or
o a second mixed IBI obtained from a combination of at least said user representative synthetic data $\{N_s\}$ and

said at least one 1D or 2D data slice $\{I_N, I_P$ and/or $I_A\}$.

the system further comprises a fusion module configured to merge the at least one 1D or 2D data slice obtained for each modality $\{I_N, I_P, I_A\}$ into a unique 1D or 2D data slice $\{I_{NPA}\}$ by using at least one fusion model, wherein, depending on a third configuration parameter:

- said at least third IBI is obtained from said unique 1D or 2D data slice $\{I_{NPA}\}$ instead of being obtained from said at least one 1D or 2D data slice $\{I_N, I_P, I_A\}$; and/or
- said second mixed IBI is obtained from a combination of at least said user representative synthetic data $\{N_s\}$ and said unique 1D or 2D data slice $\{I_{NPA}\}$ instead of being obtained from a combination of at least said user representative synthetic $\{N_s\}$ and said at least one 1D or 2D data slice $\{I_N, I_P, I_A\}$.

the physiological data comprise at least one of: a first optical signal and/or an electrical signal representative of a measurement of a vascular or muscular function of the user, such as a photoplethysmyography or an electromyography, and/or a first acoustic signal such as a bioacoustics-based signal like the user's voice, coming from at least one specific physiological sensor;

the anatomical data comprise at least one of: a second optical signal and/or a second acoustic signal representative of morphologic information or density information relative to the user, such as a broadband ultrasound attenuation, quantitative ultrasounds, bioacoustics-based techniques, a computed-tomography image or a magnetic resonance image, coming from at least one specific anatomical sensor;

the receiving module is also configured to receive at least one external user identifier $\{E_{ID}\}$, and wherein the ID generating module is configured to generate a combined individual biometric identifier by combining said at least one individual biometric identifier to said at least one external user identifier $\{E_{ID}\}$;

said ID management module is further configured to send to a recipient an information signal representative of said authentication result, said recipient being said user (10) or an external user interface, and said information signal being at least one of: a visual signal, an auditory signal, a kinesthetic signal, an olfactory signal, a gustative signal (S120)

the system further comprises a stimulation module configured to control an external stimulation device configured to deliver to said user (10) at least one sensory stimulus, said sensory stimulus being at least one of: a visual stimulus, an auditory signal, a kinesthetic signal, an olfactory stimulus; and the receiving module is further configured to receive a feedback signal from said user (10) in response to said at least one delivered sensory stimulus; and/or

the system is embedded in an apparatus, said apparatus being one of: an earbud or earphone, a headband, an earring, a headset such as an augmented Reality - AR - headset, a Virtual Reality - VR - headset, a Mixed Reality - MR - headset, smart glasses.

According to another aspect, the present disclosure relates to a computer-implemented method for securely authenticating a user, the method comprising:

- receiving biometric data of said user, said biometric data of said user comprising at least neural data $\{N\}$ of said user, said neural data $\{N\}$ comprising at least one neural signal $S_N$ function of time and of at least one channel, said at least one channel covering a specific area of said user's head;
- generating user representative synthetic data $\{N_s\}$ using at least one generative model configured to receive as input said received neural data $\{N_r\}$, wherein said at least one generative model has been previously pre-trained on neural data obtained from a plurality of subjects at different mental states, from different recording devices, and acquired by at least two channels;

- generating at least one individual biometric identifier - IBI - from at least said generated user representative synthetic data $\{N_s\}$ using a biometric identity - ID - model, said biometric ID model being a Transformer-based model; and

depending on a predetermined condition:

- comparing said at least one IBI to at least one user's signature stored in a memory and outputting an authentication result; or
- saving said at least one IBI as at least one user's signature in said memory.

According to other advantageous aspects of the disclosure, the method comprises one or more of the features described in the following embodiments, taken alone or in any possible combination:

said at least one generative model is configured for generating said user representative synthetic data $\{N_s\}$ comprising synthetic neural signals function of time and of at least one synthetic channel, said at least one synthetic channel covering an area of said user's head different from said specific area covered by said at least one channel of said received neural data $\{N_r\}$;

said at least one generative model is a Generative Adversarial Network - GAN - based model using a convolutional neural network architecture, said at least one generative model being fine-tuned with an enrollment dataset, and wherein said enrollment dataset comprises recording neural data of said user at various mental states and/or at various times of a day;

when the biometric data received comprises more modalities in addition to neural data $\{N\}$, such as physiological data $\{P\}$ and/or anatomical data $\{A\}$, and depending on a first configuration parameter, said at least one individual biometric identifier - IBI - generated by the identifier ID generating module comprises:

- a first IBI obtained from at least said user representative synthetic data $\{N_s\}$ and, at least a second IBI obtained from said physiological data $\{P\}$ and/or said anatomical data $\{A\}$; and/or
- a first mixed IBI obtained from a combination of at least said user representative synthetic data $\{N_s\}$ and, said physiological data $\{P\}$ and/or said anatomical data $\{A\}$;

the method further comprises, after receiving said biometric data of said user: pre-processing said received biometric data $\{N_r, P_r, A_r\}$ by applying at least one of: a bandpass filter, an alignment, an artifact removal, and/or a standardization; and/or analyzing said received biometric data $\{N_r, P_r, A_r\}$, respectively said pre-processed data when available $\{N_p, P_p, A_p\}$, and computing a quality parameter; and wherein said user representative synthetic data are generated $\{N_s\}$ by using said pre-processed and/or analyzed neural data $\{N_{p/a}\}$ instead of the received neural data $\{N_r\}$;

the method further comprises: encrypting said at least one individual biometric identifier - IBI - and transmitting said at least one encrypted IBI through a communication network; receiving and decrypting said at least one encrypted IBI; and, depending on said predetermined condition:

- comparing said at least one decrypted individual biometric identifier to at least one user's signature stored in said memory and output the authentication result; or

- saving said at least one decrypted individual biometric identifier as at least one user's signature in said memory;

the method further comprises further comprising, when the biometric data received comprises more modalities in addition to neural data $\{N\}$, such as physiological data $\{P\}$ and/or anatomical data $\{A\}$: converting, for at least one modality, the corresponding data received into at least one 1D or 2D data slice $\{I_N, I_P$ and/or $I_A\}$; and wherein, depending on a second configuration parameter:

- said least one generative model is configured to receive as input the at least 1D or 2D neural data slice $\{I_N\}$, instead of said received neural data $\{N_r\}$; and/or
- said at least one generated individual biometric identifier - IBI - comprises:

   o a first IBI obtained from said synthetic data and, at least a third IBI obtained from said at least one 1D or 2D data slice $\{I_N, I_P$ and/or $I_A\}$;
   and/or
   o a second mixed IBI obtained from a combination of at least said user representative synthetic $\{N_s\}$ and said at least one 1D or 2D data slice $\{Irr, I_P$ and/or $I_A\}$;

the method further comprises merging the at least one 1D or 2D data slice obtained for each modality $\{I_N, I_P$ and/or $I_A\}$ into a unique 1D or 2D data slice $\{I_{NPA}\}$ by using at least one fusion model, and wherein, depending on a third configuration parameter:

- said at least third IBI is obtained from said unique 1D or 2D data slice $\{I_{NPA}\}$ instead of being obtained from the at least one 1D or 2D data slice {Irr, $I_P$ and/or $I_A$}; and/or
- said second mixed IBI is obtained from a combination of at least said user representative synthetic data {$N_s$} and said unique 1D or 2D data slice {$I_{NPA}$} instead of being obtained from said user representative synthetic data {$N_s$} and said at least one 1D or 2D data slice {$I_N$, $I_P$ and/or $I_A$};

the physiological data comprise at least one of: a first optical signal and/or an electrical signal representative of a measurement of a vascular or muscular function of the user, such as a photoplethysmyography or an electromyography, and/or a first acoustic signal such as a bioacoustics-based signal like the user's voice, coming from at least one specific physiological sensor;

the anatomical data comprise at least one of: a second optical signal and/or a second acoustic signal representative of morphologic information or density information relative to the user, such as a broadband ultrasound attenuation, quantitative ultrasound, bioacoustics-based techniques, a computed-tomography image or a magnetic resonance image, coming from at least one specific anatomic sensor;

the method further comprises receiving at least one external user identifier {Em}; and wherein generating at least one individual biometric identifier comprises generating a combined individual biometric identifier by combining said at least one individual biometric identifier to said at least one external user identifier {$E_{ID}$};

the method further comprises sending to a recipient an information signal representative of said authentication result, said recipient being said user (10) or external user interface, and said information signal being at least one of: a visual signal, an auditory signal, a kinesthetic signal, an olfactory signal, a gustative signal; and/or

the method further comprises controlling an external stimulation device configured to deliver to said user at least one sensory stimulus, said sensory stimulus being at least one of: a visual stimulus, an auditory signal, a kinesthetic signal, an olfactory stimulus, and/or a gustative stimulus; and the biometric data received also comprise a feedback signal from said user in response to said at least one delivered sensory stimulus.

In addition, the disclosure relates to a computer program comprising software code adapted to perform a method for securely authenticating a user compliant with any of the above execution modes when the program is executed by a processor.

The present disclosure further pertains to a non-transitory program storage device, readable by a computer, tangibly embodying a program of instructions executable by the computer to perform a method for securely authenticating a user compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM, an EPROM (Erasable Programmable ROM) or a Flash memory, a portable CD-ROM (Compact-Disc ROM).

**DEFINITIONS**

In the present invention, the following terms have the following meanings:
The terms **"adapted"** and **"configured"** are used in the present disclosure as broadly encompassing initial configuration, later adaptation or complementation of the present system and method, or any combination thereof alike, whether effected through material or software means (including firmware).

The term **"processor"** should not be construed to be restricted to hardware capable of executing software, and refers in a general way to a processing device, which can for example include a computer, a microprocessor, an integrated circuit, or a programmable logic device (PLD). The processor may also encompass one or more Graphics Processing Units (GPU), whether exploited for computer graphics and image processing or other functions. Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

**"Machine learning (ML)"** designates in a traditional way computer algorithms improving automatically through experience, on the ground of training data enabling to adjust parameters of computer models through gap reductions between expected outputs extracted from the training data and evaluated outputs computed by the computer models.

A **"hyper-parameter"** presently means a parameter used to carry out an upstream control of a model construction, such as a remembering-forgetting balance in sample selection or a width of a time window, by contrast with a parameter of a model itself, which depends on specific situations. In ML applications, hyper-parameters are used to control the learning process.

**"Datasets"** are collections of data used to build an ML mathematical model, so as to make data-driven predictions or decisions. In **"supervised learning"** (i.e. inferring functions from known input-output examples in the form of labelled training data), three types of ML datasets (also designated as ML sets) are typically dedicated to three respective kinds of tasks: **"training",** i.e. fitting the parameters, **"validation",** i.e. tuning ML hyper-parameters (which are parameters used to control the learning process), and **"testing",** i.e. checking independently of a training dataset exploited for building a mathematical model that the latter model provides satisfying results.

A **"neural network (NN)"** designates a category of ML comprising nodes (called **"neurons"**), and connections between neurons modeled by **"weights".** For each neuron, an output is given in function of an input or a set of inputs by an **"activation function".** Neurons are generally organized into multiple **"layers",** so that neurons of one layer connect only to neurons of the immediately preceding and immediately following layers.

The above ML definitions are compliant with their usual meaning, and can be completed with numerous associated features and properties, and definitions of related numerical objects, well known to a person skilled in the ML field. Additional terms will be defined, specified or commented wherever useful throughout the following description.

In the context of the present disclosure and of neural measurements, such as EEG (electroencephalography), a **"channel"** refers to an individual recording pathway or sensor that captures electrical activity from a specific location on the scalp or any other relevant areas (for example: in-ear area like ear canal, ear concha, or mastoids). It represents a single data stream of neural signals obtained from a specific electrode or sensor. In EEG, for example, multiple electrodes or sensors may be strategically placed on the scalp or any relevant area of the body to capture electrical potentials generated by the brain or other physiological processes. Each electrode or sensor may be connected to an amplification and recording system, and the electrical activity detected at each location is referred to as a channel. The channels are typically labeled or numbered for identification purposes. By having multiple channels, EEG measurements allow for the simultaneous recording of electrical activity from different brain regions or physiological sources. These channels provide spatial information about neural activity patterns and can be used to analyze brain dynamics, detect abnormalities, monitor brain states, or investigate cognitive processes.

It's worth noting that the term **"channel"** can be used more broadly in the context of the present disclosure to refer to the recording pathway or sensor for other modalities, such as electrocorticography (ECoG), electrocardiography (ECG), electromyography (EMG), or other neurophysiological measurements. The specific definition and application of a channel may vary depending on the neural measurement technique employed.

## BRIEF DESCRIPTION OF THE DRAWINGS

The present disclosure will be better understood, and other specific features and advantages will emerge upon reading the following description of particular and non-restrictive illustrative embodiments, the description making reference to the annexed drawings wherein:

**Figure 1** is a schematic representation of an embodiment of a method for securely authenticate a user.

**Figure 2** is a schematic representation of the method for securely authenticate a user according to another embodiment.

**Figure 3** represents an example of pre-processing operations on different types of signals such as a neural signal $S_N$, an optical signal O or an acoustic signal Ac, and according to an embodiment of one of the steps of the method as illustrated in **figures 1** and **2.**

**Figure 4** represents an example of a 2D conversion processed of different types of signals and according to an embodiment of one of the steps of the method as illustrated in **figures 1** and **2.**

**Figure 5** illustrates an example of image fusion with two types of modalities.

**Figure 6** is a schematic representation of a generative model configured to generate user representative synthetic data, and that may be used in one of the methods represented in **figures 1 and 2** for.

**Figure 7** is a schematic representation of a generative adversarial architecture adapted to generate at least one generative model (the generator), which may be used in one of the methods represented in **figures 1 and 2.**

**Figure 8** is a schematic representation of a U-Net architecture that may be used in one of the methods represented in **figures 1** and **2** for generating user representative synthetic data.

**Figure 9** is a schematic architecture of a possible discriminator based on a convolutive neural network architecture.

**Figure 10** is an illustration of a scalp equipped with electrodes positioned according to the 10-20 international system.

**Figure 11** is an embodiment of one the steps of the method as illustrated in figures 1 and 2.

**Figure 12a** illustrates a general architecture of a transformer encoder, and **figure 12b** details one block of the transformer encoder.

**Figure 13** represents an exemplary functional diagram of two steps of the method as illustrated in **figures 1** and **2.**

**Figure 14** is an illustration of a neural biometric authentication system which may implement one of the methods represented in figure 1 and figure 2.

On the figures, the drawings are not to scale, and identical or similar elements are designated by the same references.

## DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein may represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present disclosure relates to a computer-implemented method for securely authenticating a user. The present disclosure also relates to a neural biometric authentication system for securely authenticating a user and configured to, but not limited to, implement the present method. This system will be detailed after the description of the method.

METHOD FOR SECURELY AUTHENTICATE A USER

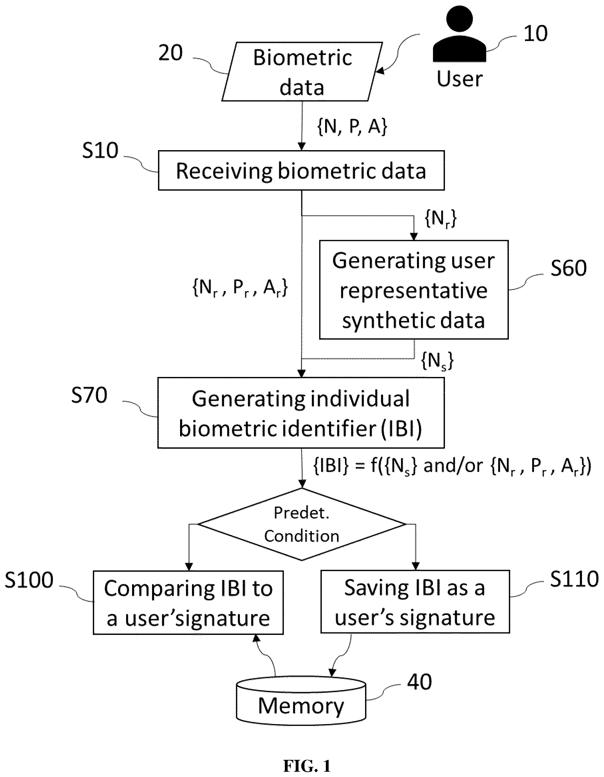

As illustrated in **figure 1,** the method for securely authenticating a user 10 comprises three main steps:

- step S10: receiving biometric data 20 of said user 10, said biometric data 10 of said user 10 comprising at least neural data {N} of said user 10;
- step S60: generating user representative synthetic data $\{N_s\}$ using at least one generative model configured to receive as input said received neural data $\{N_r\}$, wherein said at least one generative model has been previously pre-trained on neural data obtained from a plurality of subjects at different mental states, from different recording devices, and acquired by at least two channels;

- step S70: generating at least one individual biometric identifier (IBI) from at least said generated user representative synthetic data $\{N_s\}$ using a biometric identity (ID) model; and

depending on a predetermined condition:

- step S100: comparing said at least one individual biometric identifier (IBI) to at least one user's signature stored in a memory 40 and outputting an authentication result; or
- step 5110: saving said at least one individual biometric identifier (IBI) as at least one user's signature in said memory 40.

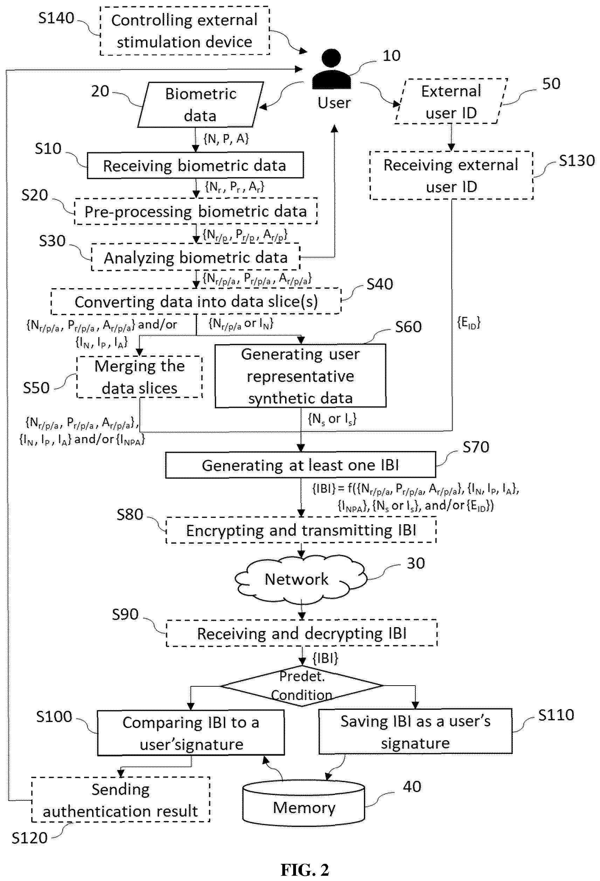

As illustrated in **figure 2,** the method for securely authenticating a user 10 may further comprise optional steps, which can be applied alone or in combination when compatible:

- Step S20: pre-processing said received biometric data $\{N_r, P_r, A_r\}$ by applying at least one of: a bandpass filter, an alignment, an artifact removal, and/or a standardization;
- Step S30: analyzing said received biometric data $\{N_r, P_r, A_r\}$ or said pre-processed biometric data $\{N_p, P_p, A_p\}$ when available, and computing a quality parameter
- Step S40: converting, for at least one modality of the biometric data received, the corresponding data received into at least one 1D or 2D data slice $\{Irr, I_P, I_A\}$;
- Step S50: merging the at least one 1D or 2D data slice obtained for each modality $\{I_N, I_P, I_A\}$_into a unique 1D or 2D data slice $\{I_{NPA}\}$ by using at least one fusion model;
- Step S80: encrypting said at least one individual biometric identifier and transmitting said at least one encrypted individual biometric identifier through a communication network 30;
- Step S90: receiving and decrypting said at least one encrypted individual biometric identifier;
- Step S120: sending to a recipient an information signal representative of said authentication result;
- Step S130: receiving at least one external user identifier $\{E_{ID}\}$; and/or
- Step S140: controlling an external stimulating device configured to deliver to said user 10 at least one sensory stimulus, said sensory stimulus being at least one of: a visual stimulus, an auditory signal, a kinesthetic signal, an olfactory stimulus, and/or a gustative stimulus.

Each of these steps will now be described in detail:

Step S10: Receiving biometric data {N, P, A}

The neural data $\{N\}$ included in the biometric data 20 received may comprise at least one neural signal $S_N$ function of time and of at least one channel, such as: electroencephalogram (EEG), electrooculography (EOG), magnetoencephalogram (MEG), functional near-infrared spectroscopy (fNIRS), functional magnetic resonance imaging (fMRI), positron emission tomography (PET), or single photon emission computed tomography (SPECT). These neural signals, such as EEG, are highly individualistic and difficult to forge, making them an effective means of identification. Furthermore, said at least one channel covers a specific area of said user's head. Advantageously, said neural data of the user 10 are acquired by devices or apparatuses comprising one or a plurality of neural sensors like, for example: headsets (such as an augmented Reality - AR - headset, a Virtual Reality - VR - headset, a Mixed Reality - MR - headset), headphones, earbuds, earrings, earpieces or smart glasses. When the neural data of the user 10 come from a plurality of channels, it increases the performance of the identification.

In an advantageous embodiment, said biometric data 20 further comprise more modalities in addition to said neural data $\{N\}$ of the user 10, such as physiological data $\{P\}$ and/or anatomical data $\{A\}$ relative to the user 10. For example, the physiological data $\{P\}$ may comprise at least one: a first optical signal and/or an electrical signal representative of a measurement of a vascular or muscular function of the user 10, such as a photoplethysmyography or an electromyography, and/or a first acoustic signal such as a bioacoustics-based signal like the user's voice, coming from at least one specific physiological sensor. The anatomical data $\{A\}$ may comprise at least one of: a second optical signal and/or a second acoustic signal representative of morphologic information (e.g. sonar-based inner ear reconstruction) or density information (e.g. cranial bones characterization) relative to the user, such as a broadband ultrasound attenuation, quantitative ultrasounds, bioacoustics-based techniques, a computed-tomography (CT) image or a Magnetic Resonance Image (MRI), coming from at least one specific anatomical sensor. In figures 1 and 2, $\{N_r\}$ represents the neural data received, $\{P_r\}$ represents the physiological data received, and $\{A_r\}$ represents the anatomical data received. The physiological and anatomical data may be acquired by adapted sensors which can be integrated in the above-cited devices or apparatuses comprising one or a plurality of neural sensors.

In the case where the user 10 receives at least one sensory stimulus from an external device, the biometric data 20 may also comprise a feedback signal from said user 10 in response to said at least one delivered sensory stimulus. Depending on the nature of said feedback signal, the feedback data contained will be included in the neural data {N}, the physiological data {P} and/or the anatomical data {A}.

Step S20: Pre-processing the biometric data received {$N_r$, $P_r$, $A_r$}

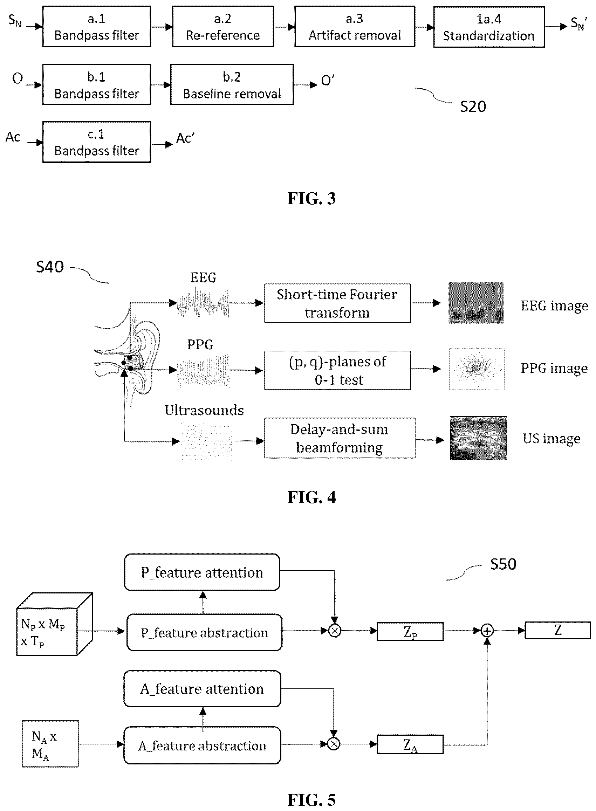

**Figure 3** represents an example of pre-processing which depends on the nature of the data, and thus of the corresponding signals to be pre-processed. The different data contained in the biometric data 20 are provided in real-time, and can be buffered to process data chunks of specific duration. Depending on the type of data, thus on the type of signals, a specific preprocessing chain will be used. In the example shown in **figure 3**:

Bloc a represents the chain to pre-process neural signals, $S_N$, of electromagnetic origin as EEG and MEG, for example. Segments $S_N$ are matrices of size T x C, where C is the number of channels (at least, C=1) and T=t*Fs the number of data samples, where t is the duration of the segment in seconds and Fs is the sampling frequency.

A bandpass filter (bloc a.1) is applied to remove low frequencies (cut-off frequency between 0.5 and 2Hz) and high frequencies (up to the gamma frequency, i.e. from 40 to 100Hz). The bound frequencies may be adjusted according to the quality of the neural data provided by the sensors.

If the number of channels C is greater than or equal to 2, a re-reference (bloc a.2) can be applied to reduce noise. Re-reference is the process of adjusting brain electrical activity recordings to a chosen reference. Usually, EEG recordings are made using multiple electrodes/sensors placed on the scalp or any other relevant area (for example: in-ear area like ear concha, ear canal, or mastoids). Each electrode measures the electrical activity of the brain relative to another reference electrode or a neutral point. Re-reference is done to get a more accurate representation of the relationships between different brain regions. It can be carried out in different ways, in particular by using an average reference, an intracranial reference or a mathematical reference. For example, a possible re-referencing procedure is to subtract of all channels to each channel individually.

Then, an algorithm to reduce noise can be applied (bloc a.3). A possible implementation is to apply independent component analysis (ICA) if C > 2, then identify and remove components whose distributions match typical artifacts such as cardiac beats, eye blinks, eye movements and muscular activity.

Finally, a standardization (bloc a.4) can be performed. By performing signal normalization, the performance of subsequent deep learning models can be improved. After standardization, the mean of the data on each channel of the sample is 0 and the standard deviation is 1.

Bloc b represents the procedure to preprocess optical biosignals, O, such as photoplethysmography (PPG), near-infrared spectroscopy (NIRS) and spectroscopy. First, signals are bandpass filtered (bloc b.1) to suppress unwanted, frequencies and then apply baseline removal (bloc b.2) to reduce noise caused by factors such as skin motion and ambient light. A possible implementation of baseline removal is to apply a moving average filter.

Bloc c represents the preprocessing procedure for acoustic biosignals, Ac, from audible signals recorded by microphones (voice, acoustic signature of specific parts of the body), to ultrasounds (such as Doppler imaging or pulse-echo imaging) and acoustic impedances. Data is filtered (bloc c.1) between specific cut-off frequencies in order to remove unwanted oscillations and improve further blocs to extract audio and anatomical features.

In **figures 1 and 2**, {$N_p$} represents the neural data pre-processed, {$P_p$} represents the physiological data pre-processed, and {$A_p$} represents the anatomical data pre-processed.

Step S30: Analyzing the biometric data received {$N_r$, $P_r$, $A_r$} or pre-processed {$N_p$, $P_p$, $A_p$}

Analyzing the biometric data received {$N_r$, $P_r$, $A_r$}, respectively the pre-processed data {$N_p$, $P_p$, $A_p$} when available, consists in verifying that said biometric data 20 are usable by computing a quality parameter, and verifying if the quality parameter respects at least one predetermined criterion. Said quality parameter may be computed based on time-series characteristics both in temporal and frequency domain (descriptive statistics, linear and nonlinear measurements) compared to gold-standard data, and said at least one criterion may be representative of:

- signal strength: the signal(s) should have sufficient strength to be received and interpreted accurately without significant degradation or distortion;
- signal-to-noise ratio (SNR): a high SNR indicates that the desired signal is strong compared to background noise or interference, making it easier to extract the relevant information;
- bandwidth: sufficient bandwidth ensures that the signal carries the necessary information without excessive loss or distortion;
- signal quality: the signal(s) should be free from distortions, artifacts, or other impairments that could affect its integrity or legibility. This criterion is particularly relevant in audio, video, or image signals;

- modulation/demodulation: the signal(s) should be modulated in a way that is compatible with the receiver's demodulation scheme. This ensures that the signal(s) can be properly extracted and decoded;
- signal stability: the signal(s) should remain stable over time, without significant variations or fluctuations. Stability is important to maintain reliable communication or accurate data transmission;
- signal durability: the signal(s) should be able to withstand various environmental conditions, such as interference, attenuation, or multipath effects, depending on the specific transmission medium;
- compatibility: the signal(s) should conform to the protocols, standards, or formats expected by the receiving system or device. Compatibility ensures proper reception and interpretation of the signal(s);
- signal integrity: the signal(s) should retain its original characteristics and content during transmission or processing, without significant loss or corruption.

If said at least one criterion is not respected, a new acquisition of the biometric data 20 need to be realized. In this case, a message or a signal can be delivered to the user 10 so new biometric data 20 can be sent and received.

It is to be noted that this analysis does not modify the nature of the data received $\{N_r, P_r, A_r\}$ or pre-processed $\{N_p, P_p, A_p\}$. However, for a better understanding of **figures 1 and 2,** the neural data analyzed represented by $\{N_a\}$ are the analyzed neural data considered as exploitable / accepted which mean that all or part of the above-cited criteria are respected, preferably at most one criterion is not respected. In the same manner, the physiological and anatomical data analyzed respectively represented by $\{P_a\}$ and $\{A_a\}$ are the analyzed data which are considered as exploitable / accepted because they respect all or part of the above-cited criteria, preferably at most one criterion being not respected.

Step S40: Converting data into 1D or 2D data slice(s) $[I_N, I_P, I_A]$

This step S40 consists in computing, for at least one modality, at least one 1D or 2D data slice $\{I_N, I_P,$ and/or $I_A\}$ of the corresponding data received $\{N_r, P_r, A_r\}$, pre-processed $\{N_p, P_p, A_p\}$ and/or analyzed $\{N_a, P_a, A_a\}$ when available. **Figure 4** illustrates an example of a 2D conversion on signals having different modalities: a neural signal EEG representative of neural data of the user 10, an optical signal PPG representative of physiological data of the user 10, and ultrasound signals representative of anatomical data of the user 10.

A possible (preferred) implementation uses signal processing techniques to encode time-varying signals into 2D data slices representing different biometric levels to benefit from further fusion methods exploiting convolutional neural networks (CNN)

The type of data slices, 1D or 2D, can vary according to the type of biometric data, for example:

*Spectrograms:* Spectrograms are 2D images expressing oscillatory changes in time. They can be implemented using Fourier Transform (FT), Wavelet Transform (WT), Hilbert Transform (HT), Empirical Mode Decomposition (EMD) or other similar decomposition techniques. With Neural data, spectrograms allow to represent power band changes in brain activity in a time-frequency plane and subsequently extract the neural signature associated to an individual. With voice or an acoustic signal, spectrograms can characterize voice tones in the time-frequency plane individual voice tones, and add supplementary information sequences.

*State-space plots:* They provide a visual representation of the system's dynamics by plotting the current state or phase of the system against its previous states. These techniques allow to distinguish between chaotic and regular dynamics of a deterministic dynamical system, such as the cardio-vascular system. They can be implemented using Pointcaré plots, attractor reconstruction plots, 0-1 test for chaos and other 2D representations of time-series. For example, with physiological data P such as: data from the vascular system (PPG, Blood flow and perfusion, where subject-specific plots can be obtained from the analysis of the dynamics of the cardio-vascular system; or motion data (accelerometer, gyroscopes), where gait, body and limb movements contain useful information to detect subject-specific patterns.

*Sonography (ultrasound imaging):* Using ultrasounds, anatomic data can be reconstructed using a plurality of techniques, depending on the ultrasound techniques employed. For wearable technology, beamforming is the most suitable technique as it allows for a reduced number of sensors, focusing on specific directions or regions of interest. By combining and weighting the received signals appropriately, the technique synthesizes the desired image. This block can implement Delay-and-Sum or Plane-Wave beamforming. Other time-series encoding techniques, such as Gramian Angular Fields (GAF) and Markov Transition Fields (MTF). They can be applied to neural data and physiological signals.

Other possible implementations include, but are not limited to, using temporal signals to feed CNN, computing features from the temporal signals (peak amplitudes, moving average values, entropy measurements) and then converting them into 2D images.

Step S50: Merging the images into a unique 1D or 2D data slice $\{I_{NPA}\}$

In this step S50, the eventually available 1D or 2D data slices $\{I_N, I_P,$ and/or $I_A\}$ are taken to build a unique 1D or 2D data slice $\{I_{NPA}\}$ representative of a neuro-anatomic feature vector, Z.

The purpose of this block is double fold:

- Increase accuracy: Leverage additional information to enhance the performance of the biometric ID block.
- Increase security: Add supplementary authentication steps using different biometric levels.

Using two or more modalities, multi-level feature abstraction and fusion can be applied. In the absence of supplementary data (physiological data P and/or anatomical data A), this step is omitted.

Given that the biometrical modalities are heterogeneous and of variable number, the present method proposes a late fusion approach (based on Stahlschmidt et al., 2022), in which 1D or 2D data slices from each modality $\{I_N, I_P,$ and/or $I_A\}$ are processed by independent models to output a feature vector. The models to compute feature vectors are preferably convolutional neural networks (CNN), with a variable number of layers to map the input data slices (of variable dimension) into output vectors of the same size. Each modality vector is then weighted by attention parameters, with the aim at giving the importance to the most relevant modality (in terms of data quality and quantity). The attention modules take the feature vector as input and output a set of attention weight parameters that can be implemented, preferably, by a neural network (NN).

Finally, the weighted vectors are aggregated to obtain the final feature vector Z. **Figure 5** illustrates an exemplary implementation of this step S50, in the case where physiological data {P} and anatomical data {A} are available in the biometric data 20 received.

A novelty introduced by the present method is the creation of a new user-dependent factor, inheriting specific characteristics of the user's physiology and/or anatomy. This information can be used either to reinforce the security in a double authentication factor or to increase the performance of ID matching by associating independent modal classifiers.

Step S60: Generating user representative synthetic data $\{N_s\}$

This step consists in augmenting the received neural data $\{N_r\}$ of the user 10 (respectively the pre-processed and/or analyzed neural data $\{N_{p/a}\}$, or the at least one 1D or 2D neural data slice $\{I_N\}$ when available) with said at least one generative model, and outputting a modified version of the inputted signal, corresponding to said user representative synthetic data $\{N_s\}$ (respectively named $\{I_s\}$ when generated from the at least one 1D or 2D neural data slice $\{I_N\}$), which contain user-specific characteristics and, advantageously spatial information. The aim of the data augmentation is to increase the size and diversity of the received neural data $\{N_r\}$ (usually limited in channel numbers and duration), thereby enhancing the generalization and robustness of the biometric ID model. Said at least one generative model may be based one deep neural networks, such as Generative Adversarial Networks (GANs) or variational auto-encoders (VAEs).

In order to be compatible with a large variety of users, mental states, neural sensors, number and location of channels, the at least one generative model is pre-trained on neural data obtained from a plurality of subjects at different mental states, from different recording devices, and acquired by at least two channels.

Advantageously, to reinforce the authentication and enhance the generation of the at least one IBI, said at least one generative model may further be fine-tuned on enrollment data comprising recording neural data of said user 10 at various mental states and/or at various times of a day or a week.

To generate said user representative synthetic data $\{N_s\}$ (respectively $\{I_s\}$), said at least one generative model may comprise an ensemble of generators that use said received neural data $\{N_r\}$ of the user 10 (respectively said pre-processed and/or analyzed neural data $\{N_{p/a}\}$, or respectively the at least one 1D or 2D neural data slice $\{I_N\}$ when available) to output a modified version of the input signal. Modified signals contain user-specific characteristics of the input signals, and may also be enriched by spatial information.

User-specific underlying information and spatial information may be added as follows: First, a number of generators is pre-trained specifically to synthesizing neural data from specific brain areas (such as frontal, temporal, occipital and other areas). Then, pre-trained models are fine-tuned with user's neural data to map original signals to several areas, thus increasing artificially the number of channels. Importantly, generated data is correlated to the input data as a multichannel neural dataset.

The generative model learns to generate data that is specific to the user 10. To do so, the generative model (thus each of its generators) needs to be pre-trained, using a variety of subjects and neural data (respectively a variety of neural data slices generated from the variety of subjects and neural data), including different mental states and different channel positions.

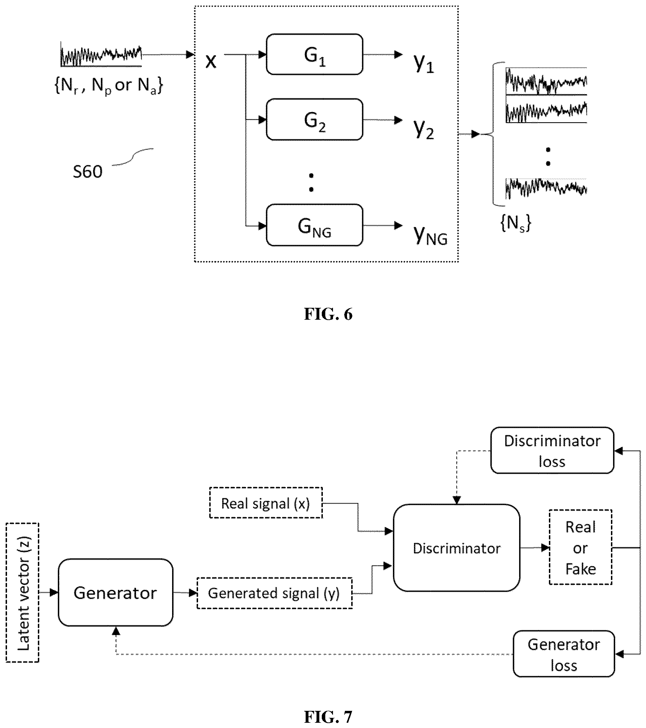

**Figure 6** illustrates an exemplary implementation of step S60, wherein the generative model comprises NG generators (NG being an integer greater or equal to 1), each trained to map the input signal x, recorded in a specific area of the user's head, into one or more different channel positions. Hence, each one of the generators $G_k$ (k=1...NG) is trained with a dataset composed by signals representing the mapping.

For instance, if the input signal is sensed in the temporal position, one generator transforms this signal to be similar to a signal sensed in the frontal area, one generator transforms this signal to be similar to a signal sensed in the central, and so on with a desired number of generators. To perform data augmentation, at least one GAN is required to generate one supplementary, artificial neural signal, corresponding to said user representative synthetic data.

A possible implementation to train the generators is to use GANs design.

*Description of GANs*

Generative adversarial networks (GANs) consist of two subunits: a generator (G(x)) and a discriminator network (D(x)), one providing feedback to the other in a competitive manner. The generator tries to generate as realistic data as possible, with the aim of being labeled as real by the discriminator. The discriminator takes a generated fake (generator output) or real example (a real EEG segment) as an input and classifies the input as fake or real. The result of the comparison is fed iteratively to the generator and the discriminator so they can improve the model to be more realistic, until the discriminator cannot distinguish real and fake data. This "competition" can be expressed as a zero-sum game with the following objective, $L_{GAN}$

Equation 1:

$$L_{\text{GAN}}(D, G, x, z) = E_{x \sim P_{\text{data}(x)}}[\log(D(x; \theta_D))] + E_{z \sim P_z(z)}[\log(1 - D(G(z; \theta_G); \theta_D))]$$

Equation 2:

$$\theta_G{}^*, \theta_D{}^* = \text{argmin}_{\theta_G} max_{\theta_D} L_{\text{Gan}}(D, G, x, z)$$

where D and G are two neural networks with their respective parameters $\theta_D$ and $\theta_G$. Real EEG data is denoted as x, and z is n-dimensional latent vector or noise. $P_{data(x)}$ is the distribution of data and $P_z(z)$ is the distribution of noise. During the training phase, the GAN aims at learning the mapping from random noise vector z to output signal y, G: z→y by estimating the parameters $\theta_D$ and $\theta_G$, in which the loss is maximal concerning $\theta_D$ and minimal concerning $\theta_G$.

The general architecture of the GANs is shown in **figure 7,** where x corresponds to the real signal that conditions the generation of the synthetic signal y and z corresponds to the random noise vector. Dotted lines correspond to feedback information from the functions loss to train the generator to improve the generated signals, and to train the discriminator to better classify real and fake signals.

*Architecture of generators*

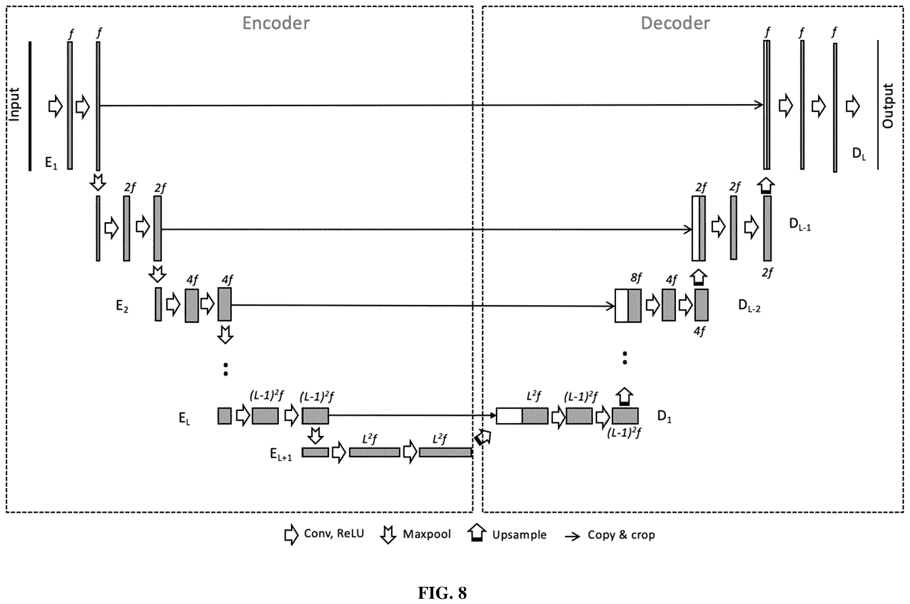

**Figure 8** illustrates a possible implementation for the at least one generative model comprising NG generators $G_k$ based on encoder-decoder networks using convolutional neural network (CNN) architecture, and particularly using the "U-net" approach (Ronneberger et al., 2015). The U-Net architecture includes a contracting (encoder) path and an expansive (decoder) path. The encoder pathway is responsible for capturing high-level, abstract features from the input data, and it shares similarities with the architecture of a convolutional network.

In the encoder pathway, a common practice is to apply repeated sets of operations to extract features. These operations typically consist of two convolutions followed by a rectified linear unit (ReLU) activation function. For 1D data such as neural signals, the convolutions are adapted to operate in 1D rather than the 2D convolutions used for images. The convolutions in the encoder are typically performed using unpadded convolutions, hence the spatial dimensions of the feature maps are reduced after each convolution operation.

During each convolution, a set number of filters (*f*) or kernels are utilized. These filters determine the number of features or channels in the output feature maps. The choice of *f* is often based on the desired capacity and complexity of the network. Typically, the number of filters increases as we progress deeper into the encoder, allowing the network to capture more intricate and abstract features from the input data.

By employing unpadded convolutions and adjusting the number of filters in each convolutional operation, the U-Net architecture can effectively extract and represent hierarchical features at different scales. This ability enables the network to learn increasingly sophisticated representations and ultimately achieve better performance in generation tasks.

After each convolution, a rectified linear unit (ReLU) activation function is applied element-wise to the feature maps. The ReLU function introduces non-linearity into the network, setting all negative values to zero while leaving positive values unchanged. This non-linear activation helps capture complex patterns and introduces the ability to model more sophisticated relationships within the data.

By repeating this sequence of convolutions and ReLU activations, the encoder pathway gradually captures higher-level, abstract features while reducing the spatial dimensions of the feature maps. The downsampling is typically achieved through operations such as max-pooling or strided convolutions, which reduce the size of the feature maps while increasing the number of feature channels.

The encoder comprises L downsampling layers ($E_1$ to $E_L$), and each downsampling layer performs a convolution that divides by two the number of feature channels. Also, the decoder comprises a plurality of upsampling layers ($D_1$ to $D_L$), and each upsampling layer performs a deconvolution that doubles the number of feature channels. An output with identical dimensions than the input is given by the U-Net architecture.

The possible implementation of figure 8 can be done by setting the number of filters (*f*) to 64 and the number of layers to 4. In that case, if the input is a 1D signal of size $512 \times 1$ (e.g. 2 seconds of neural data sampled at 256 Hz), then application of this signal to input layer results in a slice of size 256x16. Application of this slice to $E_1$ results in a slice of 128x32, which applied to $E_2$ results in a 64x64 slice, which applied to $E_3$ results in a slice of size 32x128 and finally, the application of layer $E_4$ provides a 16x256 slice. During the expansive path, the process is mirrored in layers $D_1$, $D_2$, $D_3$ and the output layer, that ensures that the output has the same dimension than the input.

### *Architecture of discriminators*

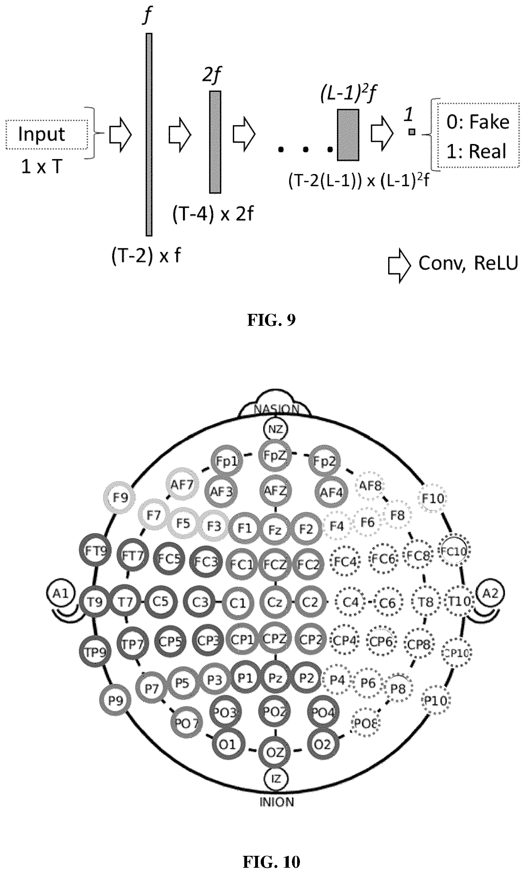

The discriminators can also be based in convolutional neural networks. A possible implementation is to use a PatchGAN approach, as illustrated in **figure 9.** In a PatchGAN, instead of considering the entire input signal as a whole, the discriminator can classify smaller patches or segments independently. This is convenient in the context of neural signals, because instead of looking at each time sample (as done in traditional GAN discriminators), processing separately patches by subsequent layers can better identify dynamics associated to different oscillation bands. The size of the patches can be adjusted based on the desired level of detail and local pattern recognition. Finally, PatchGAN is a good choice to increase training efficiency and help to prevent the discriminator from overfitting to the training data.

PatchGANs typically use a series of L convolutional layers, which can learn local features of the input signal without reducing the size of the feature maps or increasing the computational complexity of the discriminator. The filters can be of size 3x1 or 5x1.

The final (output) layer of the discriminator consists of a single node with a sigmoid activation function, producing a probability score indicating the authenticity of the input signal.

A possible implementation of discriminator based on **Figure 9** can be done by setting *f* to 64 and L to 4. In that case, if the input is a 1D signal of size 1x512 (e.g 2 seconds of neural data sampled at 256 Hz), then application of this signal to input layer results in a feature map of size 510x64. Application of this slice to the second convolution layer results in a feature map of 508x128, which applied to next convolution layer results in a 506x256 feature map, which applied to the last convolution layer results in a feature map of size 504x1.

### *Mapping and Spatial information*

The main idea is to map a sensed neural signal x into its equivalent to any position of a multichannel system. Some definitions are needed to explain in detail the method to create the generative blocks:

- Reference positioning systems (RPS): Sensor positions on the scalp (or any other relevant area) according to some standard. Most common configurations for high density EEG systems are the International 10-20 or 10-10 systems. Other specific configurations exist in a variety of wearable sensing devices.
- Device's sensor positions ($\Phi_{XY}$): Positions in the scalp used by the device to record input data, according one reference positioning system.
- Position subsets ($\Phi_Y$): Groups of positions from the ensemble of RPS. Groups need to follow a neuro-anatomic repartition, hence included positions are in close proximity. At least, two position subsets are needed. In practice, its number is determined by the number of desired augmented channels. Therefore, $\Phi_Y = \{\Phi_1, \Phi_2, ... \Phi_{NG}\}$. Position subsets contain at least two positions of at least one RPS.
- Generator training dataset ($GTD_k$): An ensemble of neural signals recorded in a position subset. Each dataset is used to train a generator $G_k$.

The aim of creating position subsets is to obtain generators specialized at generating signals from a neuro-anatomical area, but not limited to specific electrode locations. This provides flexibility to include positions from different RPS, and hence, any recording device.

In a possible configuration illustrated in **figure 10,** a 10-20 international system and 11 groups is employed to form the reference subsets and hence, the generators.

**Figure 10** is an illustration of a scalp and electrodes positioned according to the 10-20 International system. 11 different reference subsets ($\Phi_1$,... $\Phi_{11}$) are highlighted in different grey levels. Frontal subset ($\Phi_1$, at the top and in center of the figure) comprises Fp1, Fp2, FpZ, AF3, AF4, AFz, F1, F2 and FZ. Left frontal subset, $\Phi_2$, comprises: F3, F5, F7, F9, AF7. Left temporal subset, $\Phi_3$ comprises: FT9, FTP7, T9, T7, TP9 and TP7. Left temporal-central, $\Phi_4$ comprises: FC5, FC3, C5, C3, CP5 and CP3. Central subset, $\Phi_5$ comprises: FC1, FCZ, FC2, C1, CZ, C2, CP1, CPZ and CP2. Left posterior subset, $\Phi_6$ comprises: P9, P7, P5, P3 and PO7. Posterior subset, $\Phi_7$ comprises: P1, PZ, P2, PO3, PO2, PO4, O1, OZ and O2. Right positions are surrounded by dotted lines of the same gray level for their left equivalent subsets.

In a possible configuration, the generators are created to map a single EEG channel recorded in the ear canal. Without an identical position in the 10-20 system, the equivalent position $\Phi_{xy}$ is T9.

*Pre-training generators $G_k$*

The pre-training of each generator $G_k$ may consist in the following steps:

*Data preparation*

In order to correctly pre-train each generator, the training data needs to be prepared. This preparation consists in: First of all, define position subsets which may depend on the specificities of the neural biometric authentication system implementing the method. If the login system is based on the brain response to certain stimuli, then subsets need to encompass areas where targeted mental states can be properly mapped (e.g. emotions can elicit bilaterally asymmetric neural responses). If the login system is cross-state, then a homogenous distribution of positions is more appropriate. Once the number of position subsets and their components are defined, generator training datasets can be built.

Secondly, select a multichannel neural data from a public and/or private dataset. To ensure the generalizability of the system and the effectiveness of the pre-training process, the following aspects needs to be considered:

- High Signal-to-Noise Ratio, ensuring accurate and reliable measurements.
- Inclusion of various recording devices.
- Inclusion of various mental states: a range of mental states is necessary, including resting states with both opened and closed eyes, mental load, evoked emotions, and other relevant cognitive processes. If the authentication system is designed for a specific cognitive task, the data must capture the corresponding cognitive processes.
- Sufficient subject diversity and number to ensure representative sampling, encompassing a diverse user population.
- Proper anonymization and good data acquisition practices, ensuring that individual identities are protected, and data collection is conducted responsibly and ethically.

Thirdly, pre-process the training data to minimize artefacts by applying the same procedures than the one described in the pre-processing step S20. It is to be noted that this third step is optional but the pre-training gives better results when the pre-processing is done.

Fourth, select channel data belonging to a subset k (k=1..NG) and cut into segments of T seconds (input data is buffered in T seconds segments).

Fifth, repeat the process until NG datasets are complete.

*Initialize pre-training parameters*

When using a U-net or a deep learning architecture, the initialization of the pre-training parameters is realized as follow, defining:

- for the generator having a U-net architecture: the number of layers, number of filters, filters size and convolutions for the encoder and the decoder pathways. During initial iterations, the number of layers can be small (e.g. 3) and increase up to 8 for example but not limited to.
- for the discriminator, defining the number of convolution layers, number of filters and size of filters.
- the learning rate (step size taken during each update of the model's parameters)
- the batch Size (number of samples used in each iteration of the training process)
- the loss function (equation (2))

Advantageously, a validation strategy may also be processed to ensure that the pre-training is correctly done and gives reliable results. A possible strategy is to employ K-fold cross-validation method to evaluate the transformation performance with K = 10, for example, which means that 90% of subjects were randomly selected as a training set, and 10% were used for testing.

*Adversarial pre-training process*

The discriminator is trained in an alternating fashion with the generator. In each round of training, the discriminator is first trained on a batch of real data. The discriminator is then trained on a batch of fake data generated by the generator. The discriminator's loss function is minimized in each training iteration.

Briefly, the procedure to train the generator and the discriminator is as follows:

1 - Initialize the generator and discriminator randomly.

2 - Train the discriminator on a batch of real data and a batch of fake data generated by the generator, while minimizing the discriminator's loss function.

3 - Train the generator on the feedback from the discriminator, while minimizing the generator's loss function.

4 - Repeat steps 2 and 3 until the generator is able to generate data that is indistinguishable from real data. The generator is then ready to generate user representative synthetic data from the received neural data $\{N_r\}$ of the user 10 (respectively the pre-processed and/or analyzed neural data $\{N_{p/a}\}$, or the at least one 1D or 2D neural data slice when available).

*Generator fine-tuning*

Advantageously, a fine-tuning can be used to improve the realism of the generated user representative synthetic data by using the pre-trained generative model on data from different subjects, devices and tasks.

This fine-tuning requires to collect data from new users to be able to generate individual-like neural data acquired with a specific sensor (not necessarily the same used to build the pre-trained generative model). This new data is called enrollment dataset.

This collect may be done by a system implementing the method which would guide the new users through a visual/audio interface to acquire the enrollment dataset. Then, data quality may be assessed. When quality is considered satisfactory, then the systems may record the new user's data in various mental states (enrollment tasks); for example: resting with opened/closed eyes, performing mental computations, evoking emotions, processing visual, audio, tactile or other sensorial stimuli and other cognitive tasks. Eventually, enrollment dataset might ask the new user to repeat some of the tasks in another time of the day or another day to deal with intra-user variability of neural data.

Given that only a few samples from a new user may be available to fine-tune the pre-trained generative model, an incremental learning is preferably used. Incremental learning is a process of training a model on a series of small datasets. Each dataset is added to the model one at a time. The pre-trained generative model can be then fine-tuned on the new dataset. An exemplary implementation of this fine-tuning procedure is as follows:

1- Split the enrollment dataset into a training set (80%) and a validation set (20%).
2- Train the U-Net generator on the training set by freezing the weights of the pre-trained generative model.
3- Evaluate the performance of the U-Net generator on the validation set. If the U-Net generator is not overfitting to the training set, proceed to step 4. Otherwise, adjust the hyper-parameters of the U-Net generator and repeat step 3.
4- Add a new layer to the U-Net generator. The new layer can be added to the U-Net generator to learn the features of the new data.
5- Fine-tune the U-Net generator on the validation set. The U-Net generator can be fine-tuned using backpropagation.
6- Evaluate the performance of the U-Net generator on the validation set. If the U-Net generator is not overfitting to the validation set, proceed to step 7. Otherwise, adjust the hyper-parameters of the U-Net generator and repeat step 6.
7- Repeat steps 4-6 until the U-Net generator is able to generate realistic user representative synthetic data from the new subject.

*User representative synthetic data generation for ID process*

Once the generator models are fine-tuned by using the enrollment dataset, they are ready to proceed to generate the user representative synthetic data $\{N_s\}$ (respectively $\{I_s\}$ when the pre-training and the fine-tuning are realized on 1D or 2D neural data slices) for ID purposes.

Advantageously, if data qualities (at step S30) or authentication success ratios (at step S100) are low, the method may further comprise: asking the user 10 to repeat some of the enrollment tasks described before.

Step S70: generating at least one individual biometric identifier (IBI)

The purpose of this step S70 is to generate at least one individual biometric identifier, or IBI, used to label and describe the user 10. Said at least one individual biometric identifier generated may serves to enroll users (i.e. register a new user 10 based on one or more IBI, see step S110), or verify (i.e. authenticate) the user 10 (see step S100).

When the biometric data 20 received comprise at least neural data {N} of the user 10, the at least one IBI is generated from at least said user representative synthetic data $\{N_s\}$ using a biometric identity (ID) model. This biometric ID model is preferably a transformer-based model, such as a temporal and/or spatial transformer encoder.

In the case where the neural data received $\{N_r\}$ come from only one or two channels, said at least one IBI is generated by using said neural data received $\{N_r\}$ (respectively said pre-processed and/or analyzed neural data $\{N_{p/a}\}$ when available) in addition to said user representative synthetic data $\{N_s\}$.

When the biometric data 20 received comprise more modalities, in addition to the neural data {N} of the user 10, such as physiological data {P} and/or anatomical data {A}, the at least one IBI generated may comprise, depending on a first configuration parameter:

- a first IBI obtained from at least said synthetic data $\{N_s\}$ and, at least a second IBI obtained from said physiological data {P} and/or said anatomical data {A}; and/or
- a first mixed IBI obtained from a combination of at least said user representative synthetic data $\{N_s\}$ and, said physiological data {P} and/or said anatomical data {A}

In the case where at least one modality is converted into at least one 1D or 2D data slice $\{I_N, I_P$ and/or $I_A\}$, and depending on a second configuration parameter, the at least one IBI generated may comprise:

- a first IBI obtained from said synthetic data and, at least a third IBI obtained from said at least one 1D or 2D data slice $\{I_N, I_P$ and/or $I_A\}$; or
- a second mixed IBI obtained from a combination of at least said user representative synthetic $\{N_s\}$ and said at least one 1D or 2D data slice $\{I_N, I_P$ and/or $I_A\}$.

Furthermore, in the case where the at least one 1D or 2D data slice obtained for each modality $\{I_N, I_P$ and/or $I_A\}$ are merged into a unique 1D or 2D data slice $\{I_{NPA}\}$, and depending on a third configuration parameter:

- said at least third IBI may be obtained from said unique 1D or 2D data slice $\{I_{NPA}\}$ instead of being obtained from the at least one 1D or 2D data slice $\{I_N, I_P$ and/or $I_A\}$; and/or
- said second mixed IBI may be obtained from a combination of at least said user representative synthetic data $\{N_s\}$ and said unique 1D or 2D data slice $\{I_{NPA}\}$ instead of being obtained from said user representative synthetic data $\{N_s\}$ and said at least one 1D or 2D data slice $\{I_N, I_P$ and/or $I_A\}$

Finally, in the case where at least one external user identifier $\{E_{ID}\}$ is also received, the at least one IBI generated may comprise a combined individual biometric identifier generated by combining one of the above-cited IBI (depending on the configuration parameters) to said at least one external user identifier $\{E_{ID}\}$.

It is to be noted that, for security and privacy issues, raw biometrical data 20 (neural N and physiological P signals, A anatomic data) are not stored. The at least one IBI is a latent vector that capture the essential features of the biometrical signals received while minimizing interpretability. In the present method, the only information requiring to be stored is the at least one IBI, that, moreover can benefit of an additional encryption procedure (see step S80).

For enhanced security, the encoder models used in this step S70 can be modified in various ways, including retraining them with different hyper-parameters and introducing a secret key during certain stages of encoding. Such modifications may be valuable in preventing information leaks. If the encoder model requires reconstruction, the only inconvenience for users would be to repeat the enrollment procedure.

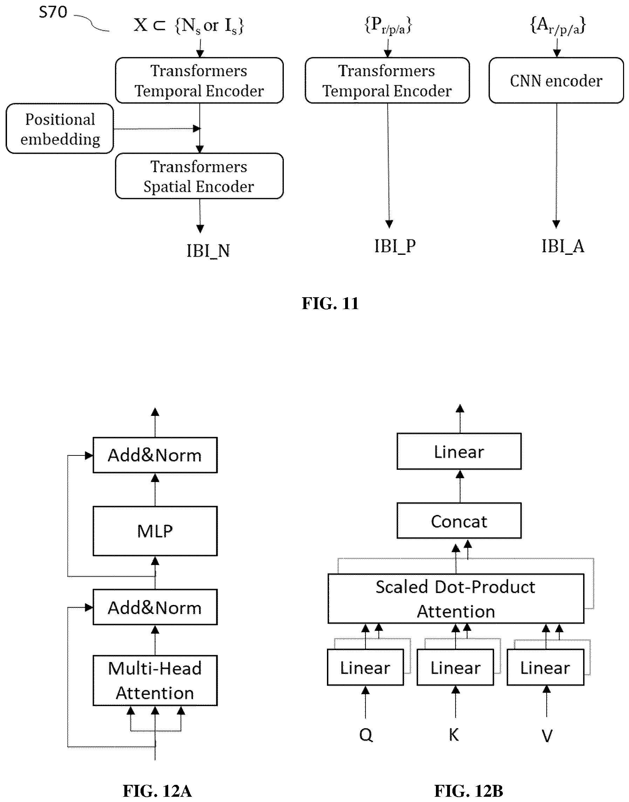

**Figure 11** illustrates an exemplary implementation of step S70, wherein the biometric ID model comprises three generators: a neural ID generator, a physiological ID generator and an anatomical ID generator, and wherein the at least one IBI comprises: an IBI "IBI_N" representative of the neural data received $\{N_r\}$, an IBI "IBI_P" representative of the physiological data received $\{P_r\}$, and an IBI "IBI_A" representative of the anatomical data received $\{A_r\}$.

To capture time-domain information from EEG, for example, the Temporal Transformer Encoder (TTE) extracts temporal correlations in neural data. Given that user representative synthetic data $\{N_s\}$ may be multichannel, spatial correlations can be extracted and fused to temporal ones in a Spatial Transformer Encoder (STE). The IBI thus obtained, IBI_N, is a vector encoding spatio-temporal, low level characteristics of the EEG sample.

TTE takes into account the long-distance dependence in time. The pre-processed neural data $\{N_p\}$ may be directly feed into the transformer, instead of employing transformations such as convolutions or trainable linear projections. For a given input $X = [X_1, X_2, ..., X_M] \in \mathbb{R}^{T \times M}$ (and T being the number of data points for that input sample and M being an integer which may be representative of the total number of the real $\{N_{r/p/a}\}$ and/or synthetics channels $\{N_s\}$), a self-attention may be computed in the transformer to estimate temporal correlations, and then the sum is weighted to obtain the new representation. Self-attention is computed as:

Equation 3:

$$Attention(Q, K, V) = Softmax\left(\frac{QK^T}{\sqrt{d_k}}\right)V$$

where Q, K, and V are all matrices obtained by linear projections of the input and $d_k$ is a scalar factor. To jointly attend to information from different representation subspaces at different positions, multi-head attention mechanism on the input can be employed. Each transformer encoder is composed by two units: multi-head attention (MHA) and multi-layer perceptron (MLP). Each unit employs residual connection and layer normalization (LN) to improve the speed of training and robustness of the model. **Figures 12a and 12b** illustrate the above calculation process. Particularly, **Figure 12a** illustrates a general architecture of a transformer encoder and **Figure 12b** details the multi-head attention block architecture. The TTE part can be expressed by:

Equation 4:

$$h_l^t = LN(MHA(z_{l-1}^t) + z_{l-1}^t), l = 1, 2, \ldots, L$$

Equation 5:

$$z_l^t = LN(MLA(h_l^t) + h_l^t), l = 1, 2, \ldots, L$$

STE. The channels in the EEG signal represent the locations of the electrodes on the scalp, and the functional connectivity between different brain regions can be calculated by considering the dependencies among different channels. Similar to TTE, in STE an attention mechanism to model the spatial information among different channels can be used. In order to preserve the spatial location information, the position encoding of the spatial domain to the input can be added, then the result can be fed to STE:

Equation 6:

$$z_0^s = tran(z_L^t) + \varepsilon_{pos}$$

where *tran()* represents the transpose operation and the $\varepsilon_{pos} \in \mathbb{R}^{M \times T}$ represents the position encoding. In a possible implementation, the position encoding can be represented in the form of a trigonometric function at a fixed position. $z_0^s$ denotes the representation with the addition of spatial position information. The STE, employs a similar structure than the TTE to learn the spatial information on the different channels of the neural signals. The process equation is expressed as:

Equation 7:

$$h_l^s = LN(MHA(z_{l-1}^s) + z_{l-1}^s), l = 1, 2, \ldots, L$$

Equation 8:

$$z_l^s = LN(MLA(h_l^s) + h_l^s), l = 1,2,\ldots,L$$

Advantageously, the neural ID model is trained using a large number of EEG data, including different types of sensors and mental states, including resting with closed and opened eyes, mental calculations, induced emotions, visually and auditory evoked potentials, among others. A possible source of training data may be public datasets such as Physionet, Muse 2018 (which includes wearable EEG) and many others.

Regarding the IBI_P representative of the physiological data received {$P_r$}, a possible implementation is to use a temporal transformer encoder with single-channel data to obtain temporal correlations. The output of this module, IBI_P, is a vector encoding the temporal, low level characteristics of PPG.

Regarding the IBI_A representative of the anatomical data received {$A_r$}, a possible implementation is to use a CNN to 2D anatomical data slices, for example.

Step S80: Encrypting and transmitting IBI

The aim of this step S80 is to allow the at least one IBI previously generated to be securely send into a communication network 30, in order to be able to remotely authenticate the user 10. Thus, it is required to encrypt the IBIs before transmitting the data through a designated communication protocol.

This encryption ensures that the sensitive biometric information remains protected during data transfer. This robust security measure adds an extra layer of assurance, safeguarding the integrity and confidentiality of the transmitted login data (i.e the IBIs). To ensure the security and the anonymization of the data transmitted several operations may be processed such as: de-identification wherein all identifiable information linked to the data and other personally identifiable information (PII) are removed or replaced; noise addition wherein the noise is designed to obfuscate individual-level data while preserving aggregate-level trends and patterns; and data shuffling wherein the order of the data is randomly rearranged ensuring that individual data points cannot be linked back to the original source.

Advantageously, the encryption can be implemented using a symmetric encryption algorithm, such as Advance Encryption Standard (AES). The encrypted IBIs may then be processed by a wireless transmission module.

Step S90: Receiving and decrypting IBI

When the at least one IBI has been encrypted and transmitted into a communication network 30, it is necessary to receive the encrypted IBI(s) and to decrypt it (or them if there are a plurality of IBIs), before comparing the IBI(s) or storing the IBI(s) depending on said predetermining condition. The decryption is made according to the encryption protocol used on the IBI(s).

Step S100: Comparison between the IBI and a user's signature

As described before, the comparison between the IBI and a user's signature is realized depending on a predetermined condition. This predetermined condition may be, for example: at least one user's signature is already stored in the memory 40.

In this case where such a predetermined condition is validated, the IBI(s) generated (respectively the IBI(s) decrypted) is(are) compared to said at least one user's signature stored in a memory 40.

Depending on login mode (single factor, double factor, etc) corresponding to the modalities used to generate the IBI(s), the IBI(s) will be compared to a corresponding user's signature coming from the same modalities. For example, a neural IBI, representative of only the neural data, will be compared to a neural signature of the user 10. Respectively, a physiological IBI will be compared to a physiological signature of the user 10 and an anatomical IBI will be compared to an anatomical signature. The same reasoning may be applied to combined or mixed IBI(s) which will be compared to combined or mixed signature(s) when a plurality of modalities will be simultaneously used in the IBI or in the stored signature.

At the end of the comparison, an authentication result is outputted. This authentication result may be a percentage, a binary value like 0/1, an "Identity - ID - confirmed"/"Success" response or an "Invalid ID"/"Failure" response, for example.

This comparison, also called template or identity matching, is based on measuring the similarity of the IBI(s) to the user's signatures stored in memory 40. A possible implementation includes measuring the distance between the IBI(s) and the stored signatures. Distance metrics can be Euclidean, Mahalanobis and others. Support vector machines or neural networks can also be trained to solve template matching.

Step S110: Saving IBI as a user's signature

As described before, the registration of the generated IBI (respectively the decrypted IBI) as at least one user's signature is realized depending on a predetermined condition. This predetermined condition may be, for example: the absence of a user's signature recorded in the memory 40 (meaning that an enrollment is required), a user's signature stored but having a low quality index, and/or an IBI generated having a quality index greater than the quality index of a user's signature recorded in the memory 40.

In this case, where such a predetermined condition is validated, the IBI(s) generated (respectively the IBI(s) decrypted) is(are) saved in the memory 40 as a user's signature(s) which can be used in for the comparison made in step S100.

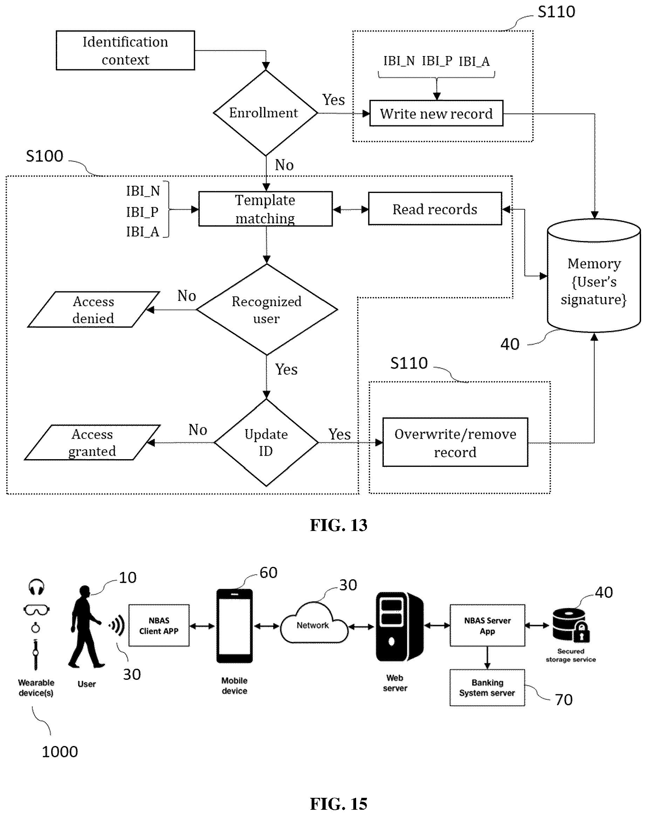

**Figure 13** illustrates a functional diagram relative to step S100 and S110, wherein the predetermined condition is whether the user 10 is enrolling (if yes step 110 is processed, if no step S100 is processed) or is wanting to overwrite/remove one of the user's signatures recorded in the memory 40 at the end of Step S100 (if yes step S110 is processed).

Step S120: Sending authentication result

In order to inform the user 10 of the authentication result, the method may further comprise sending to a recipient an information signal representative of said authentication result. Said recipient may be said user 10 or an external user interface, and said information signal may be at least one of: a visual signal, an auditory signal, a kinesthetic signal, an olfactory signal, a gustative signal, or any other signal adapted to the external interface. The information signal may be, for example: a visual notification, an auditory notification, images or animation, a video notification, a popup or tooltip, an email or SMS notification, a dynamic interface change, a biometric confirmation, a voice recognition feedback, or a haptic feedback.

Furthermore, in case of success the method may also send the appropriate token to grant the access to a requested service (banking, vehicle access, ...) and provide feedback to the user interface.

Step S130: Controlling external stimulation device

The purpose of this step S130 is to strengthen the authentication and security of the identification. In fact, the delivery of an external stimulating device to said user 10 will made the user react and generate a feedback signal which will be integrated to the biometric data received.

Depending on the nature of the stimulus delivered (i.e. visual, auditory, kinesthetic, olfactory, and/or gustative), the feedback signal will affect at least the neural data $\{N\}$, and may also affect the physiological data $\{P\}$, and thus the new IBI(s) generated by the method on this new biometric data received.

Step S140: Receiving external user ID $\{E_{ID}\}$

In the same manner as step S130, the aim of step 140 is to reinforce the authentication and the security of the identification by integrating an external user ID $\{E_{ID}\}$ in the at least one IBI generated. For example, the external user ID $\{E_{ID}\}$ may be at least one of: fingerprint, facial recognition, iris scan, voice pattern, or any other type of external user ID known by a skilled person.

Advantageously and as previously described in this case, generating said at least one individual biometric identifier comprises generating a combined individual biometric identifier by combining said at least one individual biometric identifier to said at least one external user identifier $\{E_{ID}\}$.

[NEURAL BIOMETRIC AUTHENTICATION SYSTEM]

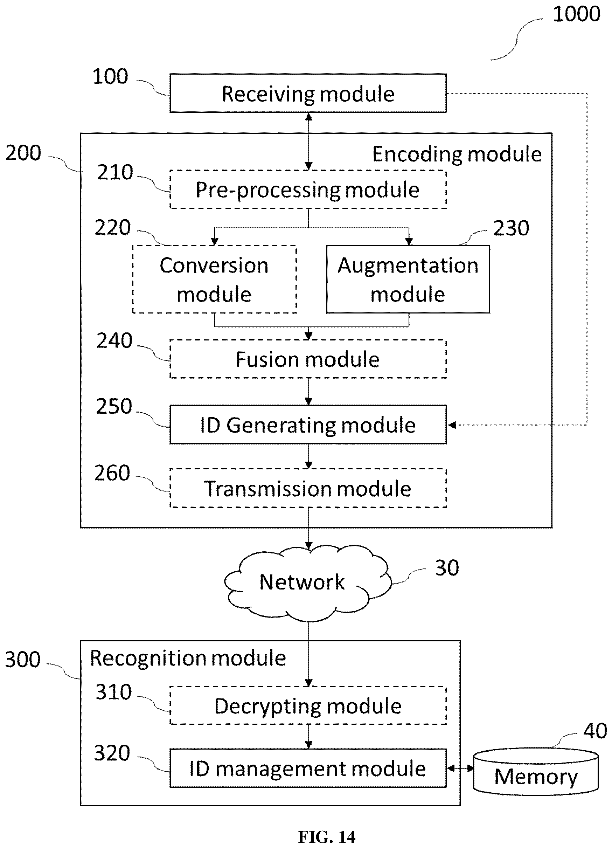

The method for securely authenticate a user, as previously described in the different embodiments, can be implemented in a neural biometric authentication system 1000 as illustrated in **figure 14.**

The system 1000 comprises three main modules:

- a receiving module 100;
- an encoding module 200; and
- a recognition module 300.

These main modules can be implemented on at least one processor.

Receiving module 100

The receiving module 100 is configured to implement the receiving step S10 and according to any one of the above-cited embodiments of step 10. Furthermore, the receiving module 100 is also configured to receive a predetermined condition as well as some optional configuration parameters.

Advantageously, the receiving module 100 is also configured to implement step S130 when an external device is connected to the system 1000. Advantageously, the receiving module 100 may also be configured to receive a feedback signal from the user 10 when a sensory stimulus has been delivered to the user 10. In general, the receiving module 100 may also be configured to receive any other information or signal, when the system 1000 is connected to another device or apparatus, such as an external stimulation device for example, with which information needs to be exchanged.

Encoding module 200

The encoding module 200 comprises at least two main submodules: an augmentation module 230 and an Identity - ID - generating module 250, wherein the augmentation module 230 is configured to implement step 60 according to any one of the above-cited embodiments of step 60, and wherein the ID generating module 250 is configured to implement step S70 according to any one of the above-cited embodiments of step 70.

As illustrated in **figure 14,** the encoding module 200 may comprise optional submodules such as:

a pre-processing module 210 configured to implement step S20 and/or step S30 according to any one of the above-cited embodiments of steps S20 and S30;

a conversion module 220 configured to implement step S40 according to any one of the above-cited embodiments of step S40.

a fusion module 240 configured to implement step S50 according to any one of the above-cited embodiments of step S50; and/or

a transmission module 260 configured to implement step S80 as previously described, and may also be configured to transmit any other information or signal, when the system 1000 is connected to another device or apparatus, such as an external stimulation device for example, with which information needs to be exchanged.

Recognition module 300

The recognition module 300 comprises at least an Identity - ID - management module 320 configured to implement at least steps S100 and S110 according to any one of the above-cited embodiments of steps S100 and S110. Advantageously, the ID management module 320 is also configured to implement step S120 and/or step S140 according to any one of the above-cited embodiments of steps S120 and S140.

In another embodiment, the recognition module 300 also comprises a decrypting module 310 when the encoding module 200 comprises the transmission module 260. The decrypting module 310 is configured to implement step S90 as previously described.

According to another embodiment, the system 1000 may further comprise a memory 40 configured to store at least one user's signature. Advantageously, the predetermined condition as well as the optional configuration parameters may also be stored in the memory 40.

[TECHNICAL ADVANTAGES OF THE METHOD AND SYSTEM]

The method and system 1000 previously described provide a solution that simplifies the user authentication process while enhancing security and efficiency for both users and service providers. Particularly, the method and system 1000 offer several advantages, such as:

User convenience and efficiency of Service Providers: the at least one individual biometric identifier - IBI - based on at least the neural data received, offers a universal login which eliminates the need for users to remember multiple sets of login credentials. Instead, they can use a single set of credentials across various platforms, reducing the burden on users and enhancing the user experience. Implementing such a universal login system also streamlines the account management process for service providers. They can leverage a standardized authentication infrastructure, reducing costs, improving security, and enhancing overall efficiency.

Enhanced security: the at least one generated individual biometric identifier - IBI - does not contain any direct biometric data anonymizing these data, which cannot be easily replicated or spoofed. This makes it more secure than methods that rely on external devices or easily-imitated physical characteristics, such as a face or a voice. Furthermore, the method and system 1000 incorporate advanced security measures, such as multifactor authentication with the use of the physiological and/or anatomical data as well as an external user identifier, biometric verification (cf. step S100), or other robust authentication mechanisms. By promoting strong security practices, the method and system mitigate the risks associated with weak passwords and the reuse of credentials.

Unique biometric measure: Neuro-cognitive based ID systems are being increasingly used because cognition is inherently unique. The way each individual process external stimuli, emotions and memories depends on neurogenesis, which is conditioned both on genetic and environmental factors. Consequently, each individual has a neuro-cognitive print identity. The at least one individual biometric identifier - IBI - is based on direct or indirect measures of the neuronal networks in the brain. Neurons generate time-changing electrical waves at several frequencies that can be measured by non-invasive (surface) or invasive (intra-cortical) sensors and also change blood oxygenation due to their activity. Sensors can be specifically designed to capture the electrical currents (electrodes), magnetic fields (magnetometers) or blood oxygenation changes in the brain (optodes). The most widely used technology for measuring neural activity is the electroencephalogram (EEG). This unexpansive, non-invasive technology uses surface electrodes on the head, mostly on the scalp, but also on the ears and into the ear canal. The singularity of each user is established by creating a comprehensive profile, said at least one IBI, based on their specific neural data. This profile serves as a distinctive identifier that sets individuals apart from one another. By analyzing various aspects of the EEG signals for example, such as frequency, amplitude, and spatial distribution, a comprehensive representation of the individual's brainwave pattern is created. Unlike other forms of identification, such as fingerprints or facial recognition, neural data are internal and not easily manipulated or replicated by external means. This attribute enhances their effectiveness as a means of identification, making them a reliable biometric measure for user authentication. By leveraging the individualistic nature of the neural data of the user 10 and incorporating advanced analysis techniques, the at least one IBI provides a robust and difficult-to-forge means of authentication for various applications and systems.

Flexibility and versatility: The method and system 1000 are hardware agnostic, meaning they can be integrated into a variety of head-mounted apparatuses, such as headphones, earbuds, glasses, and augmented reality and virtual reality headsets. This allows users to access their digital space using their preferred apparatus in a variety of settings.

**EXAMPLES OF APPLICATION OF THE AUTHENTICATION METHOD AND/OR SYSTEM**

The following use cases are given as illustrative examples of application of the authentication method and/or system previously described, it will thus be appreciated that those skilled in the art will be able to devise various use cases that, although not explicitly described or shown herein, embody the principles of the disclosure and are included within its spirit and scope.

As illustrated in **figure 15,** the method and system 1000 previously described may be use for accessing to a digital wallet 70. For example, the user 10 is on their smartphone 60 with connected earphones comprising the system 1000, and at the moment of payment through one of their bank cards entered into their Cards section via an enhanced verification step using the at least one individual biometric identifier (IBI). A similar use case is to securely accessing to a personal cloud.

More generally, the method and system 1000 previously described offer to the user the ability to store their self-custodial private keys and can take advantage of an interface for managing cryptocurrencies, monitoring balances of any imaginable digital asset, traditional currencies or financial products, and executing transactions, notably between two user profiles. At any given time, they can choose to back up their encrypted keys to a cloud system for synchronization and recovery purposes.

As stated previously, the method and system 1000 allow the user to maintain their private digital identity, without divulging any personal information. The authenticated user, being unique, can obtain a unique digital token. These method and system 1000 enable users to enter their credentials once, and in exchange, they receive a unique encrypted string of random characters. The user can then use this token to access protected systems instead of having to enter their credentials again or undergo new biometric authentication. The digital token confirms that they already have access permission.

Furthermore, the user can authenticate offline. The system 1000 can memorize the user's brainprint without the need for wired connections like Ethernet (LAN), Fiber Optic Connection, DSL (Digital Subscriber Line), ADSL (Asymmetric Digital Subscriber Line), ISDN (Integrated Services Digital Network), etc., or wireless connections such as Wi-Fi, 5G, 4G LTE, Bluetooth, Satellite Internet, etc.

Regarding all dematerialized access, a possible application of the method and system is replacing the current CAPTCHA system for verifying human authenticity based on brain data. The user 10 attempting to access a protected online service is prompted to wear a non-invasive brain-computer interface (BCI) device, such as an electroencephalogram (EEG) headset including the system 1000.

In another use case, the method and system 1000 can be utilized for a keyless vehicle access system based on biometric brain signals. For instance, user 10 can wear a Bluetooth earpiece incorporating system 1000 to gain access to their vehicle, such as a car, bike sharing service, electric scooter, and so on (the list is not exhaustive). When the vehicle detects the presence of a nearby earpiece, either through Bluetooth or another communication method, it initiates a biometric analysis session using the aforementioned method. The vehicle is equipped with a receiver element that ensures positive access for the authenticated user. To facilitate this process, the user receives a notification on their smartphone when they approach their vehicle, alerting them about an upcoming physiological data analysis session involving various signals. If the analysis is successful, the user is notified of successful login through a feedback notification, which could be in the form of a visual or auditory signal, or a haptic response involving a slight vibration. It is worth noting that the system can also operate independently without requiring the user to have a smartphone. In such cases, the test session proceeds directly through the system using an auditory signal or a slight haptic vibration to notify the user.

Another possible use case relates to spatial computing, wherein the user 10 establishes a connection to their personal profile/space using the system 1000, instead of a conventional Optic ID system. For instance, the system 1000 seamlessly integrates into the emerging spatial UX/UI era. Upon successful authentication, a dynamic interface change can be triggered, enabling the user to navigate through a customized digital world tailored to their personal user experience. The User Interface (UI) and User Experience (UX) intelligently adapt to the user's preferences and behaviors upon logging into their profile.

**Claims**

1. A neural biometric authentication system (1000) for securely authenticating a user (10), the system comprising:

   • a receiving module (100) configured to receive biometric data (20) of said user (10), said biometric data (20) comprising at least neural data {N} of said user (10), said neural data {N} comprising at least one neural signal $S_N$ function of time and of at least one channel, said at least one channel covering a specific area of said user's head (S10);
   • an encoding module (200) comprising:

       - an augmentation module (230) configured to generate user representative synthetic data {$N_s$} by using at least one generative model configured to receive as input said received neural data {$N_r$}, wherein said at least one generative model has been previously pre-trained on neural data obtained from a plurality of subjects at different mental states, from different recording devices, and acquired by at least two channels (S60);
       - an identity - ID - generating module (250) configured to generate at least one individual biometric identifier - IBI - from at least said generated user representative synthetic data {$N_s$} using a biometric identity - ID - model, said biometric ID model being a Transformer-based model (S70);

   • a recognition module (300) comprising an identity - ID - management module (320) configured to, depending on a predetermined condition:

       - compare said at least one IBI to at least one user's signature stored in a memory (40) and output an authentication result (S100); or
       - save said at least one IBI as at least one user's signature (S110) in said memory (40).

2. The system according to claim **1,** wherein said at least one generative model is configured for generating said user representative synthetic data {$N_s$} comprising synthetic neural signals function of time and of at least one synthetic channel, said at least one synthetic channel covering an area of said user's head different from said specific area covered by said at least one channel of said received neural data {$N_r$}.

3. The system according to either one of claim **1** or **2,** wherein said at least one generative model is a Generative Adversarial Network - GAN - based model using a convolutional neural network architecture, said at least one generative model being fine-tuned with an enrollment dataset, and wherein said enrollment dataset comprises recording neural data of said user (10) at various mental states and/or at various times of a day.

4. The system according to any one of claim **1** to **3,** wherein, when the biometric data (20) received comprises more modalities in addition to neural data {N}, such as physiological data {P} and/or anatomical data {A}, and depending on a first configuration parameter, said at least one individual biometric identifier - IBI - generated by the identifier ID generating module (250) comprises:

• a first IBI obtained from at least said user representative synthetic data $\{N_s\}$ and, at least a second IBI obtained from said physiological data $\{P\}$ and/or said anatomical data $\{A\}$; and/or
• a first mixed IBI obtained from a combination of at least said user representative synthetic data $\{N_s\}$ and, said physiological data $\{P\}$ and/or said anatomical data $\{A\}$.

5. The system according to any one of claim **1** to **4,** further comprising:

    • a pre-processing module (210) configured to:

        - pre-process said received biometric data (20) by applying at least one of: a bandpass filter, an alignment, an artifact removal, and/or a standardization (S30);
        - analyze said received biometric data (20), respectively said pre-processed biometric data when available, and compute a quality parameter (S20); and/or

    wherein the augmentation module (230) is configured to receive said pre-processed and/or analyzed neural data $\{N_{p/a}\}$ and, to generate said user representative synthetic data $\{N_s\}$ by using said pre-processed and/or analyzed neural data $\{N_{p/a}\}$ instead of the received neural data $\{N_r\}$.

6. The system according to any one of claims **1** to **5,** further comprising:

    • a transmission module (260) configured to encrypt said at least one individual biometric identifier - IBI - and transmit the at least one encrypted IBI through a communication network (30) (S80);
    • a decrypting module (310) configured to receive and decrypt said at least
    one encrypted IBI (S90);

    wherein, depending on said predetermined condition, said ID management module (320) is configured to:

    • compare said at least one decrypted IBI to at least one user's signature stored in said memory (40) and output the authentication result (S100); or
    • save said at least one decrypted IBI as at least one user's signature in said memory (40)(S110).

7. The system according anyone of the preceding claims, further comprising:

    • a conversion module (220) which, when the biometric data (20) received comprises more modalities in addition to neural data $\{N\}$, such as physiological data $\{P\}$ and/or anatomical data $\{A\}$, converts, for at least one modality, the corresponding data received into at least one 1D or 2D data slice $\{I_N, I_P \text{ and/or } I_A\}$ (S40); and

    wherein, depending on a second configuration parameter:

    • said least one generative model is configured to receive as input the at least 1D or 2D neural data slice $\{I_N\}$, instead of said received neural data $\{N_r\}$; and/or
    • said at least one individual biometric identifier - IBI - generated by the identifier ID generating module (250) comprises:

        - a first IBI obtained from at least said synthetic data and, at least a third IBI obtained from said at least one 1D or 2D data slice $\{I_N, I_P \text{ and/or } I_A\}$; and/or
        - a second mixed IBI obtained from a combination of at least said user representative synthetic data $\{N_s\}$ and said at least one 1D or 2D data slice $\{I_N, I_P \text{ and/or } I_A\}$.

8. The system according to claim **7,** further comprising:

    • a fusion module (210) configured to merge the at least one 1D or 2D data slice obtained for each modality $\{I_N, I_P, I_A\}$ into a unique 1D or 2D data slice $\{I_{NPA}\}$ by using at least one fusion model (S50),

    wherein, depending on a third configuration parameter:

    • said at least third IBI is obtained from said unique 1D or 2D data slice $\{I_{NPA}\}$ instead of being obtained from said at least one 1D or 2D data slice $\{I_N, I_P, I_A\}$; and/or

• said second mixed IBI is obtained from a combination of at least said user representative synthetic data $\{N_s\}$ and said unique 1D or 2D data slice $\{I_{NPA}\}$ instead of being obtained from a combination of at least said user representative synthetic $\{N_s\}$ and said at least one 1D or 2D data slice $\{I_N, I_P, I_A\}$.

9. The system according to any one of claims **4, 7** or **8,** wherein:

> • the physiological data comprise at least one of: a first optical signal and/or an electrical signal representative of a measurement of a vascular or muscular function of the user (10), such as a photoplethysmyography or an electromyography, and/or a first acoustic signal such as a bioacoustics-based signal like the user's voice, coming from at least one specific physiological sensor; and
> • the anatomical data comprise at least one of: a second optical signal and/or a second acoustic signal representative of morphologic information or density information relative to the user (10), such as a broadband ultrasound attenuation, quantitative ultrasounds, bioacoustics-based techniques, a computed-tomography image or a magnetic resonance image, coming from at least one specific anatomical sensor.

10. The system according to any one of the preceding claims, wherein the receiving module (100) is also configured to receive at least one external user identifier $\{E_{ID}\}$ (S130), and wherein the ID generating module (250) is configured to generate a combined individual biometric identifier by combining said at least one individual biometric identifier to said at least one external user identifier $\{E_{ID}\}$ (S70).

11. The system according to any one of the preceding claims, wherein said ID management module (320) is further configured to send to a recipient an information signal representative of said authentication result, said recipient being said user (10) or an external user interface, and said information signal being at least one of: a visual signal, an auditory signal, a kinesthetic signal, an olfactory signal, a gustative signal (S120).

12. The system according to any one of the preceding claims, further comprising:

> • a stimulation module configured to control an external stimulation device configured to deliver to said user (10) at least one sensory stimulus, said sensory stimulus being at least one of: a visual stimulus, an auditory signal, a kinesthetic signal, an olfactory stimulus;

> and wherein the receiving module is further configured to receive a feedback signal from said user (10) in response to said at least one delivered sensory stimulus.

13. The system according to any one of the preceding claims, wherein the system is embedded in an apparatus, said apparatus being one of: an earbud or earphone, a headband, an earring, a headset such as an augmented Reality - AR - headset, a Virtual Reality - VR - headset, a Mixed Reality - MR - headset, smart glasses.

14. A computer-implemented method for securely authenticating a user (10), the method comprising:

> • receiving biometric data (20) of said user (10), said biometric data (20) of said user (10) comprising at least neural data $\{N\}$ of said user (10), said neural data $\{N\}$ comprising at least one neural signal $S_N$ function of time and of at least one channel, said at least one channel covering a specific area of said user's head (S10);
> • generating user representative synthetic data $\{N_s\}$ using at least one generative model configured to receive as input said received neural data $\{N_r\}$, wherein said at least one generative model has been previously pre-trained on neural data obtained from a plurality of subjects at different mental states, from different recording devices, and acquired by at least two channels (S60);
> • generating at least one individual biometric identifier - IBI - from at least said generated user representative synthetic data $\{N_s\}$ using a biometric identity - ID - model, said biometric ID model being a Transformer-based model (S70); and

> depending on a predetermined condition:

> • comparing said at least one IBI to at least one user's signature stored in a memory (40) and outputting an authentication result (S100); or
> • saving said at least one IBI as at least one user's signature in said memory (40)(S110).

15. The method according to claim **14,** wherein said at least one generative model is configured for generating said user

representative synthetic data {N$_s$} comprising synthetic neural signals function of time and of at least one synthetic channel, said at least one synthetic channel covering an area of said user's head different from said specific area covered by said at least one channel of said received neural data {N$_r$}.

**FIG. 1**

**FIG. 2**

$S_N \rightarrow$ [ a.1 Bandpass filter ] $\rightarrow$ [ a.2 Re-reference ] $\rightarrow$ [ a.3 Artifact removal ] $\rightarrow$ [ 1a.4 Standardization ] $\rightarrow S_N'$

$O \rightarrow$ [ b.1 Bandpass filter ] $\rightarrow$ [ b.2 Baseline removal ] $\rightarrow O'$

$S20$

$Ac \rightarrow$ [ c.1 Bandpass filter ] $\rightarrow Ac'$

**FIG. 3**

$S40$

EEG $\rightarrow$ [ Short-time Fourier transform ] $\rightarrow$ EEG image

PPG $\rightarrow$ [ (p, q)-planes of 0-1 test ] $\rightarrow$ PPG image

Ultrasounds $\rightarrow$ [ Delay-and-sum beamforming ] $\rightarrow$ US image

**FIG. 4**

$S50$

[ $N_P \times M_P \times T_P$ ] $\rightarrow$ [ P_feature abstraction ] $\rightarrow$ [ P_feature attention ] $\rightarrow \otimes \rightarrow [ Z_P ] \rightarrow \oplus \rightarrow [ Z ]$

[ $N_A \times M_A$ ] $\rightarrow$ [ A_feature abstraction ] $\rightarrow$ [ A_feature attention ] $\rightarrow \otimes \rightarrow [ Z_A ]$

**FIG. 5**

{$N_r$, $N_p$ or $N_a$}

S60

$x$

$G_1$ → $y_1$

$G_2$ → $y_2$

.
.
.

$G_{NG}$ → $y_{NG}$

{$N_s$}

**FIG. 6**

Latent vector ($z$)

Generator

Real signal ($x$)

Generated signal ($y$)

Discriminator

Discriminator loss

Real or Fake

Generator loss

**FIG. 7**

FIG. 8

**FIG. 9**

**FIG. 10**

S70

$X \subset \{N_s \text{ or } I_s\}$

Transformers Temporal Encoder

Positional embedding

Transformers Spatial Encoder

IBI_N

$\{P_{r/p/a}\}$

Transformers Temporal Encoder

IBI_P

$\{A_{r/p/a}\}$

CNN encoder

IBI_A

**FIG. 11**

Add&Norm

MLP

Add&Norm

Multi-Head Attention

**FIG. 12A**

Linear

Concat

Scaled Dot-Product Attention

Linear

Linear

Linear

Q

K

V

**FIG. 12B**

S110

Identification context

IBI_N   IBI_P   IBI_A

Enrollment → Yes → Write new record

S100

IBI_N
IBI_P
IBI_A

Template matching ← → Read records

No

Memory {User's signature}

40

Access denied ← No ← Recognized user

Yes

Access granted ← No ← Update ID → Yes → Overwrite/remove record

S110

**FIG. 13**

Wearable device(s)   User   10   NBAS Client APP   30   60   Mobile device   30   Network   Web server   NBAS Server App   Banking System server   70   40   Secured storage service

1000

**FIG. 15**

34

1000

100 — Receiving module

200

Encoding module

210 — Pre-processing module

220 — Conversion module

230 — Augmentation module

240 — Fusion module

250 — ID Generating module

260 — Transmission module

Network 30

300 — Recognition module

310 — Decrypting module

320 — ID management module

Memory 40

**FIG. 14**

# EP 4 485 376 A1

Europäisches
Patentamt

European
Patent Office

Office européen
des brevets

## EUROPEAN SEARCH REPORT

**Application Number**

EP 23 30 6101

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TATAR AHMET BURAK: "Biometric identification system using EEG signals", NEURAL COMPUTING AND APPLICATIONS, [Online] vol. 35, no. 1, 24 September 2022 (2022-09-24), pages 1009-1023, XP093097930, London ISSN: 0941-0643, DOI: 10.1007/s00521-022-07795-0 Retrieved from the Internet: URL:https://link.springer.com/article/10.1 007/s00521-022-07795-0/fulltext.html> [retrieved on 2023-11-06] * Title; figure 3 * * page 1015, left-hand column * | 1-15 | INV. G06V10/774 G06V10/82 G06V40/10 |
| Y | CORLEY ISAAC A ET AL: "Deep EEG super-resolution: Upsampling EEG spatial resolution with Generative Adversarial Networks", 2018 IEEE EMBS INTERNATIONAL CONFERENCE ON BIOMEDICAL & HEALTH INFORMATICS (BHI), IEEE, 4 March 2018 (2018-03-04), pages 100-103, XP033345089, DOI: 10.1109/BHI.2018.8333379 [retrieved on 2018-04-06] * Title * * abstract * * B. Preprocessing; page 100 – page 101 * | 1-15 | TECHNICAL FIELDS SEARCHED (IPC) G06V |

-/--

The present search report has been drawn up for all claims

| Place of search | Date of completion of the search | Examiner |
|---|---|---|
| The Hague | 7 November 2023 | Meier, Ueli |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 3

Europäisches
Patentamt

European
Patent Office

Office européen
des brevets

# EUROPEAN SEARCH REPORT

**Application Number**

**EP 23 30 6101**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DU YANG ET AL: "EEG temporal-spatial transformer for person identification", SCIENTIFIC REPORTS, [Online] vol. 12, no. 1, 23 August 2022 (2022-08-23), XP093097971, DOI: 10.1038/s41598-022-18502-3 Retrieved from the Internet: URL:https://www.nature.com/articles/s41598-022-18502-3> [retrieved on 2023-11-06] * Title * * Preprocessing; page 3 * | 1-15 | |
| A | MAIORANA EMANUELE ED – CALDERARA SIMONE ET AL: "Learning deep features for task-independent EEG-based biometric verification", PATTERN RECOGNITION LETTERS, ELSEVIER, AMSTERDAM, NL, vol. 143, 13 January 2021 (2021-01-13), pages 122-129, XP086481744, ISSN: 0167-8655, DOI: 10.1016/J.PATREC.2021.01.004 [retrieved on 2021-01-13] * the whole document * | 1-15 | **TECHNICAL FIELDS SEARCHED (IPC)** |
| A | OZAN OZDENIZCI ET AL: "Adversarial Deep Learning in EEG Biometrics", ARXIV.ORG, CORNELL UNIVERSITY LIBRARY, 201 OLIN LIBRARY CORNELL UNIVERSITY ITHACA, NY 14853, 27 March 2019 (2019-03-27), XP081158918, DOI: 10.1109/LSP.2019.2906826 * the whole document * | 1-15 | |

-/--

The present search report has been drawn up for all claims

| Place of search | Date of completion of the search | Examiner |
|---|---|---|
| The Hague | 7 November 2023 | Meier, Ueli |

EPO FORM 1503 03.82 (P04C01)

page 2 of 3

Europäisches
Patentamt

European
Patent Office

Office européen
des brevets

# EUROPEAN SEARCH REPORT

**Application Number**

EP 23 30 6101

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FIDAS CHRISTOS A. ET AL: "A Review of EEG-Based User Authentication: Trends and Future Research Directions", IEEE ACCESS, [Online] vol. 11, 6 March 2023 (2023-03-06), pages 22917-22934, XP093097953, DOI: 10.1109/ACCESS.2023.3253026 Retrieved from the Internet: URL:https://ieeexplore.ieee.org/ielx7/6287 639/10005208/10058960.pdf?tp=&arnumber=100 58960&isnumber=10005208&ref=aHR0cHM6Ly9pZW VleHBsb3JlLmllZWUub3JnL2Fic3RyYWN0L2RvY3Vt ZW50LzEwMDU4OTYw> [retrieved on 2023-11-06] * the whole document * | 1-15 | |

TECHNICAL FIELDS SEARCHED (IPC)

The present search report has been drawn up for all claims

| Place of search | Date of completion of the search | Examiner |
|---|---|---|
| The Hague | 7 November 2023 | Meier, Ueli |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 3 of 3**